# EUROPEAN PATENT SPECIFICATION

(11) **EP 0 732 027 B1**
(45) Date of publication and mention of the grant of the patent: **10.10.2001**
(21) Application number: 95904787.9
(22) Date of filing: 02.12.1994
(51) Int. Cl.: H04N 7/087

(54) **ELECTRONIC BOOK SELECTION AND DELIVERY SYSTEM**
AUSWAHL-UND VERTEILUNGSSYSTEM FUR ELEKTRONISCHE BUECHER
SYSTEME ELECTRONIQUE DE SELECTION ET DE FOURNITURE DE LIVRES

(30) Priority: 02.12.1993 US 160194; 02.12.1993 US 160281; 07.11.1994 US 336247
(43) Date of publication of application: 18.09.1996
(73) Proprietor: DISCOVERY COMMUNICATIONS, INC., Bethesda, MD 20814-3522 (US)
(72) Inventor: HENDRICKS, John, S., Potomac, MD 20854 (US)
(74) Representative: Strehl Schübel-Hopf & Partner
(86) International application number: US9413808
(87) International publication number: WO9515649

(56) References cited:
- EP-A- 0 243 312
- WO-A-92/12599
- CA-A- 2 044 574
- GB-A- 2 168 227
- ARCHIV FüR ELECTRONIK UND UBERTRAGUNGSTECNNIK, vol.40, no.6, December 1986 pages 397 - 401 H. VAN DEN BOOM 'An Interactive Videotex System for Two-Way CATV Networks'
- PATENT ABSTRACTS OF JAPAN vol. 18, no. 11 (P-1671) 10 January 1994 & JP,A,05 250 106 (MATSUSHITA ELECTRIC INDUSTRIAL CO.,LTD.) 28 September 1993
- PATENT ABSTRACTS OF JAPAN vol. 0, no. 225 (P-484) 6 August 1986 & JP,A,61 060 150 (FUJITSU LTD.) 27 March 1986
- IEEE TRANSACTIONS ON CONSUMER ELECTRONICS, vol.CE-31, no.3, August 1985 pages 283 - 289 DR. G. T. SHARPLESS 'subscription teletext for value added services'

## Description

### BACKGROUND ART

Sparked by the concept of an information superhighway, a revolution will take place in the distribution of books. Not since the introduction of Gutenberg's movable typeset printing has the world stood on the brink of such a revolution in the distribution of text material. The definition of the word "book" will change drastically in the near future. Due to reasons such as security, convenience, cost, and other technical problems, book and magazine publishers are currently only able to distribute their products in paper form. This invention solves the problems encountered by publishers.

WO-A-92/12599, in view of which the first part of claim 1 is drafted, is directed to a system for distributing video and audio information as selected by subscribers from a source material library. The system disclosed uses data compression and storage to transmit analog and digital information to the user from the source material library to the user's audio/video recorder or standard audio/video receiver. The system does not include encryption or decryption mechanisms.

A technical article, "An Interactive Videotex System for Two-Way CATV Networks" by H. van den Boom, Archiv für Elektronik und Übertragungstechnik, vol. 40, no. 6, December 1986, pages 397-401, describes a videotex system for providing subscribers access to information stored in a data base. The system discloses using Community Antenna Television (CATV) for distributing text via the Vertical Blanking Interval (VBI) in response to subscriber selection. Notably, the system disclosed is limited to use with CATV systems, and does not provide for security.

### SUMMARY OF INVENTION

It is an object of the present invention to provide an apparatus which avoids at least some of the drawbacks encountered with comparable prior art apparatus. A more specific object may been seen to reside in the provision of an apparatus for the electronic delivery of text that is secure, portable, and subscriber interactive.

This object is met by the invention as defined in claim 1.

The unique viewer key and text data encryption features of the invention improve the security of the apparatus in that they prevent more than one viewer from accessing the text or book file.

In accordance with an embodiment of the invention, a portable viewer includes a secure microprocessor, an instruction memory and digital logic to provide security for text and data. Text and data may be transferred to the viewer in compressed and encrypted format. The secure microprocessor compares an identification number of the viewer with the incoming data and stores the data if the identification number matches that within the incoming data. The viewer may decompress, decrypt and display the data only at the moment of viewing and only for the page being viewed. Other encryption/decryption and security features may be used to prevent unauthorised access to the data.

### BRIEF DESCRIPTION OF THE DRAWINGS

Figure 1 is a block diagram of the primary components of the electronic book selection and delivery system.
Figure 2 is a schematic showing an overview of the electronic book selection and delivery system.
Figure 3 is a schematic of the delivery plan for the electronic book selection and delivery system.
Figure 4 is a block diagram of the operations centre.
Figure 5a is a flow diagram of the processing at the operations centre and uplink.
Figure 5b is a block diagram of the hardware configuration for an uplink site.
Figure 6a is a block diagram of the hardware configuration for a four component home subsystem.
Figure 6b is a schematic of a two unit home subsystem.
Figure 7 is a flow diagram of the processes performed by the video connector.
Figure 8 is a block diagram for an example of a library unit.
Figure 9 is a flow diagram of some of the processes performed by the library on the received data stream.
Figure 10 is a flow diagram of the processes performed by the library unit on information requests from the viewer.
Figure 11 is a block diagram showing the components for an example of a viewer.
Figure 12 is a flow diagram of some of the processes performed by the viewer on an information request from a subscriber.
Figure 13 is a chart depicting the menu structure and sequencing of menus in the menu system.
Figure 14a is a schematic of an introductory menu.
Figure 14b is a schematic showing an example of a main menu.
Figures 14c, 14d, 14e, 14f, 14g, 14h, 14i and 14j are schematics showing examples of submenus.
Figure 15 is a schematic diagram of an electronic book system for a bookstore or public library.
Figure 16a and Figure 16b are schematics of hardware modifications or upgrades to a set top converter.
Figure 17 is a schematic showing a set top terminal that includes a data receiver and data transmitter.
Figure 18a is a schematic of a book-on-demand system.
Figure 18b is a schematic of an operations center supporting a book-on-demand system.

### DISCLOSURE OF INVENTION. BEST MODE FOR CARRYING OUT INVENTION. INDUSTRIAL APPLICABILITY. AND DETAILED DESCRIPTION OF INVENTION

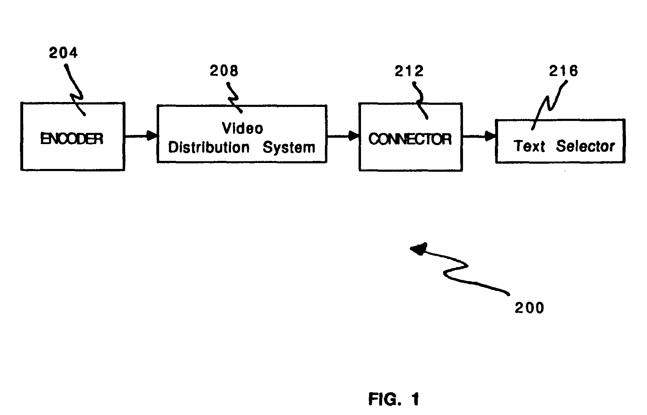

The primary components of the electronic book selection and delivery system 200 are an encoder 204, a video distribution system 208, a connector 212, and a text selector 216 as shown in figure 1. The encoder 204 places textual data on a video signal to form a composite video signal. Although the composite signal may contain only textual data, it usually carries both video and textual data. A variety of equipment and methods may be used to encode text data onto a video signal. The video distribution system 208 distributes the composite video signal from the single point of the encoder 204 to multiple locations which have connectors 212. The connector 212 receives the digital or analog video signal from the video distribution system 208 and separates, strips or extracts the text data from the composite video signal. If necessary, the extracted text data is converted into a digital bit stream. Text selector 216 works in connection with the connector 212 to select text.

Using a connector 212 and text selector 216 combination, various methods of selecting and retrieving desired text from a composite or video signal are possible. Text may be preselected, selected as received or selected after being received and stored. The preferred method is for the connector 212 to strip or extract all the text from the video signal and have the text selector 216 screen all the text as received from the connector 212. The text selector 216 only stores text in long term or permanent memory if the text passes a screening process described below.

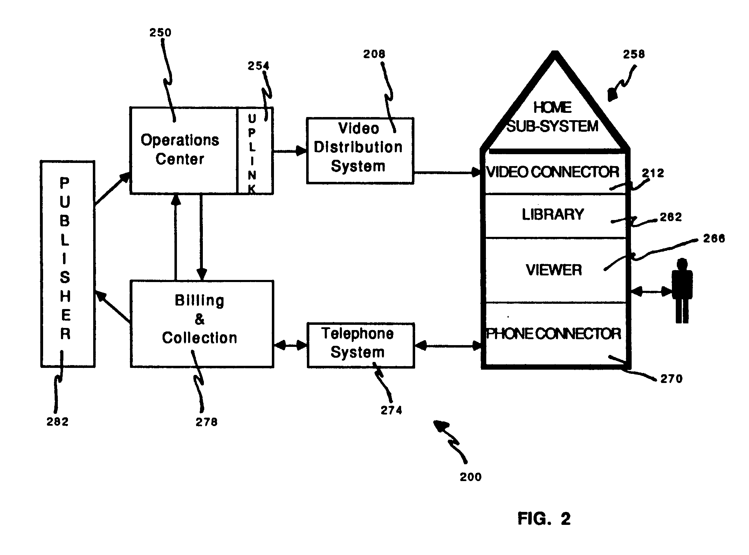

An overview of a preferred embodiment is shown in figure 2. The system 200 includes: an operations center 250 including an uplink site 254, a video distribution system 208, a home subsystem 258 including a video connector 212, a library 262, a viewer 266, and a phone connector 270, telephone system 274 and a billing and collection subsystem 278. The operations center 250 receives textual material from outside sources 282 such as publishers, newspapers, and on-line services. The operations center 250 receives this textual material in various digital formats and converts the textual material to a standard compressed format for storage. In so doing, the operations center 250 creates a pool of textual material that is available to be delivered to the home system 258. Normally, the text material is grouped by books or titles for easy access.

As used herein, "book" means textual or graphical information such as contained in any novels, encyclopedias, articles, magazines or manuals. The term "title" may represent the actual title assigned by an author to a book, or any other designation indicating a particular group, portion, or category of textual information. The title may refer to a series of related textual information, a grouping of textual information, or a portion of textual data. For example, "Latest Harlequin Romance", "Four Child Reading Books (Ages 10-12)", "Encyclopedia 'BRITANNICA'™". "President's Speech", "Instruction Manual", "Schedule of 4th of July Events", "Pet Handbooks", "Roe v. Wade", and "The Joy of Cooking" are suitable titles. Also, the title may be a graphical symbol or icon. Thus, a picture of a wrench may be a title for a repair book, a picture of a computer a title for a computer book, a graphical symbol of a telephone a title for a telephone book, a drawing of a dagger a title for a mystery book, a picture of a bat and ball a title for a sports book and a picture of tickertape a title for a business book.

The operations center 250 includes an uplink site 254 for placing the text onto a video signal and sending the composite video signal into a video distribution system. The uplink site 254 would generally include an encoder 204 (not shown in Figure 2) to encode the text onto a video signal.

Many analog and digital video distribution systems 208 can be used with this text delivery system 200, such as, cable television distribution systems, broadcast television distribution systems, video distributed over telephone systems, direct satellite broadcast distribution systems, and other wire and wireless distribution systems. Nearly any distribution system which can deliver a video signal will work with the text delivery system 200. It is also possible to distribute the text without using a video signal as described below.

The home subsystem 258 performs five primary functions, (1) connecting with a video distribution system, (2) selecting data, (3) storing data, (4) displaying data, and (5) handling transactions. An important optional function of the home sub-system 258 is communicating using a telephone communication system 274. The home subsystem 258 is made up of primarily four parts: a video connector 212 or similar type of connector for connecting with a video distribution system 208, a library unit 262 for storing and processing, a viewer unit 266 for viewing menus and text and a telephone connector 270 for connecting with a telephone communications system 274.

The billing and collection subsystem 278 may be co-located with the operations center 250 or located remote from the operations center 250. The billing and collection subsystem 278 is in communication with the home subsystem 258 via telephone-type communication systems (for example 274). Any of a number of telephone type communication systems, such as, a cellular system, will operate with the billing and collection system 278. The billing and collection system 278 records the books or portions of text that are selected or ordered by the subscriber. The collection system will charge a subscriber's credit account or bill the subscriber. In addition, the billing and collection system 278 will monitor that amount due to publishers or other outside sources 282 who have provided textual data or other services such as air time to enable the text delivery system 200 to operate.

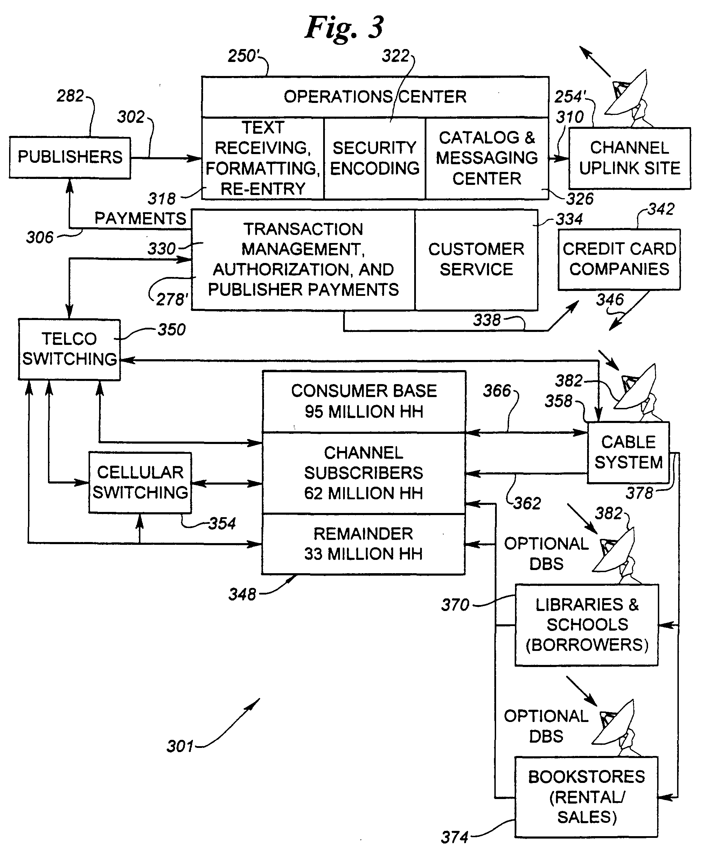

Figure 3 is an expanded overview of a preferred delivery plan 301 for the electronic book selection and delivery system 200. It is a comprehensive delivery plan 301 to support various types of users and various billing systems. Figure 3 shows that publishers 282 will provide text transfer 302 to the operations center 250' and receive payments 306 from the billing and collection system 278'. A separate channel uplink site 254' is shown in this configuration receiving data 310 from the operations center 250'. The operations center 250' has three separate sections (318, 322, 326) one for text receiving, formatting and re-entry 318, a second for security encoding 322 and a third section for catalog and messaging center functions 326.

The collection and billing system 278' shown has two sections (330, 334) one for transaction management, authorizations and publisher payments 330, and the other for customer service 334. The customer service section 334 provides for data entry and access to customer account information. Transaction accounting information 338 is supplied to credit card companies 342 by the transaction management section 330 of the billing and collection system 278'. The credit card companies 342 provide billing 346 to customers either electronically or by mail.

Three methods for communicating between the subscriber base 348 and the billing and collection system 278' are shown: by telephone switching 350 alone, cellular switching 354 and telephone switching 350 combined, and by use of the cable system 358 and the telephone switching 350. The system shown supports both one-way 362 and two-way cable communication 366 with subscribers. Public libraries and schools 370 as well as bookstores 374 may use the delivery system 301.

Public libraries and schools 370 would have a modified system to allow the viewer to be checked-out or borrowed while bookstores 374 would rent or sell the viewer and sell electronic book data. The bookstores 374 as well as the public libraries and schools 370 may be serviced by cable 378. Optional direct broadcast systems (DBS) 382 can also be used with the system 200.

### I. The Operations Center

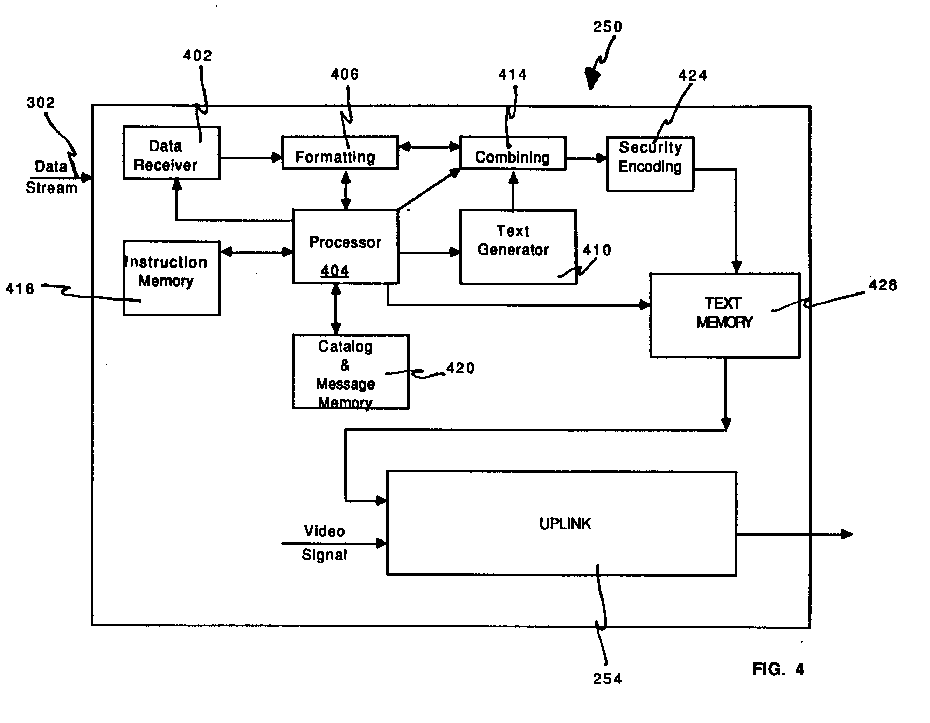

Figure 4 is a schematic of an operations center 250 which includes an uplink 254. The Operations Center 250 gathers text or books by receiving, formatting, storing, and encoding. A data stream 302 containing text is received at the operations center 250 by a data receiver 402. The data receiver 402 is under the control of a processor 404. After reception, the data stream is formatted using digital logic for formatting 406 which is also under the control of the processor 404. If any additional text is being generated at the operation center 250 locally for insertion into the distributed signal, the text generation is handled through text generator hardware 410 which may include a data receiver and a keyboard (not shown). Following processing by the text generator 410, the additional text can be added to the text received by the combining hardware 414 that includes digital logic circuitry (not shown).

The processing at the operations center 250 is controlled by a processor 404 which uses an instruction memory 416. The processor 404 and instruction memory 416 may be supplied by a personal computer or mini-computer. To perform the catalog and messaging functions, the operations center 250 uses a catalog and message memory 420 and the text generator 410 if necessary.

The data stream of text, catalog and messages is preferably encoded by security module encoding 424 prior to being sent to the uplink module 254. Various encoding techniques may be used by the security encoding module 424 such as the commercial derivative of NSA's encryption algorithm (Data Encryption System (DES)) and General Instrument's DigiCipher II. Following encoding, the encoded text may be stored in text memory 428 prior to being sent to the uplink 254. It is preferred that a first-in-first-out text memory arrangement is used under the control of the processor 404. Various types of memory may be used for the text memory 428 including RAM. The operations center 250 may use file server technology for the text memory 428 to catalog and spool books for transmission as is described below.

To transmit textual data, the delivery system 208 uses high bandwidth transmission techniques such as those defined by the North American Broadcast Teletext Standard (NABTS) and the World System Teletext (WST) standard. Using the WST format (where each line of the Vertical Blanking Interval contains 266 data bits), a four hundred page book, for example, may be transmitted during programming using four lines of the Vertical Blanking Interval at a rate of approximately one book every 1.6 minutes (63,840 bits per second). Alternatively, books may be transmitted over a dedicated channel, which interrupts programming so that 246 lines of video can be used to transmit approximately 2,250 books every hour (3.9 Mbits per second). A teletext type format is the simplest but possibly the slowest text format to use with the system 200. In either event, an encoder 204 is utilized at an uplink site 254 to insert textual data into the analog video signal. In many other respects, the delivery of the textual information is completed using existing cable television plant and equipment.

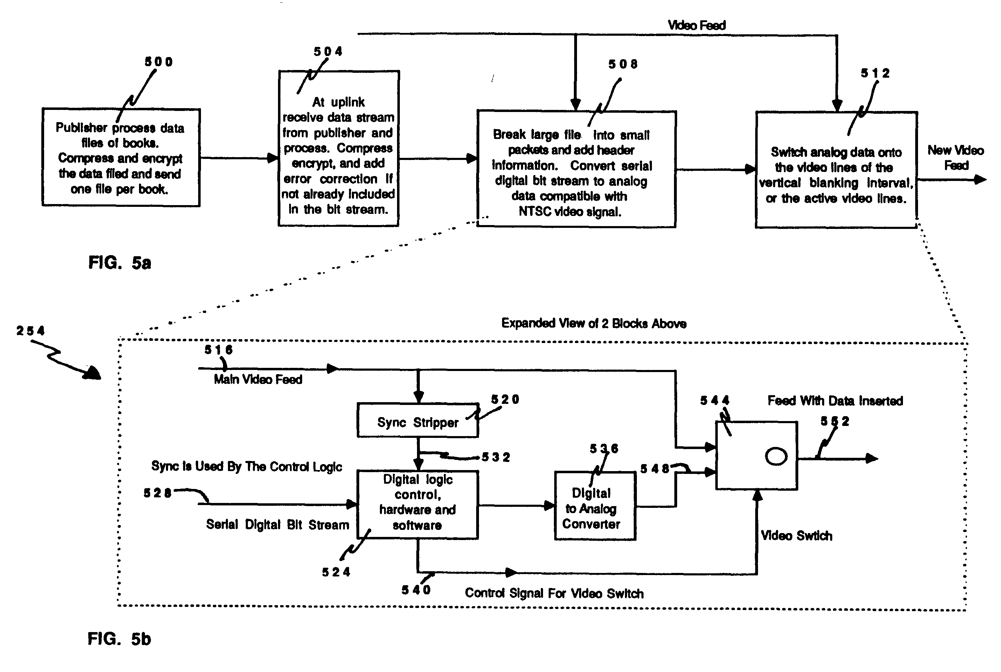

Figure 5a is a flowchart of the steps involved in processing text from the publisher or provider 282 that occurs at the operations center 250. As shown in block 500, the publisher 282 processes data files of text for books, compresses, encrypts and sends the data files to the operations center 250 or uplink 254. Text files for books are preferably sent one book at a time. As shown in block 504, the uplink 254 or operations center 250 receives and processes the data stream from the publisher 282. Generally, part of this processing includes encryption and error correction.

As shown in block 508, files are broken into smaller packets of information. Header information is added to the packets. The bit stream is converted from a serial digital bit stream to an analog bit stream that is compatible with an NTSC video signal. Block 512 shows the switching of analog data into the video lines of a video signal. The analog data is generally placed either in the VBI or the active video lines. In some instances, it may be preferable to utilize unused portions of bandwidth (such as 5-40 MHz, 70-75 MHz, 100-109 MHz or other guard bands) instead of the video lines.

Figure 5b is an example of a hardware configuration to perform some of the functions for blocks 508 and 512. A video feed 516 is received and processed through a sync stripper 520. The stripped sync signal 532 is used by the digital logic control 524. The digital logic control 524 receives the sync signal 532 and a serial digital bit stream 528 for processing. The digital logic control 524 passes the serial digital bit stream to the Digital to Analog converter 536 and outputs a control signal 540 for the video switch 544. The video switch 544 integrates the video feed 516 and analog data stream 548 into a video feed with analog data signal inserted 552.

As an alternative to cable, broadcast or other television delivery methods, the public telephone system may be used to transmit books to the subscribers. An average book would take about 7 minutes to transmit over the public telephone system. Using the telephone system, it is not necessary to combine video and text into a composite signal. In most other respects, the operation center would remain similar whether text delivery was by telephone or cable. It is preferred that file server technology (such as that described in US-A-5,262,875 US-A-(5,218,695) be used at the operation center with a telephone system text delivery method.

### II. The Home Subsystem

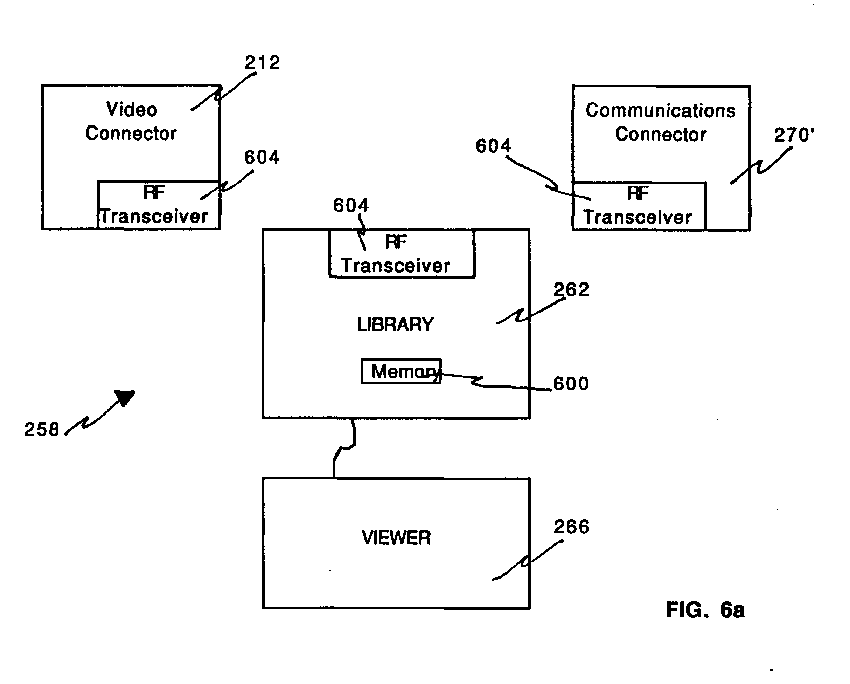

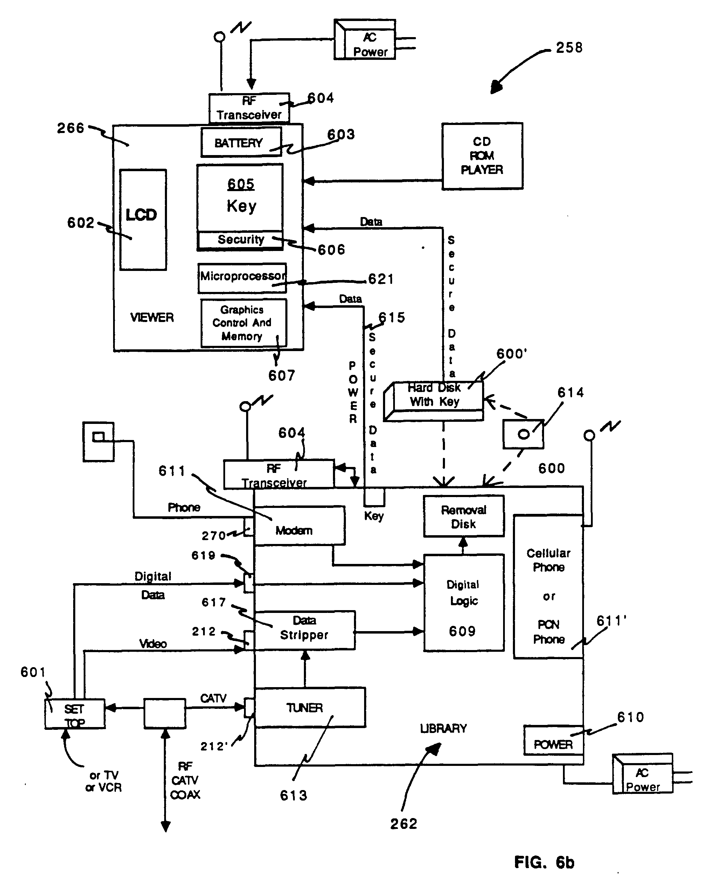

The hardware configuration for a four component home subsystem 258 is shown in figure 6a. Figure 6b shows a hardware configuration for a two component home subsystem. The home subsystem 258 performs several functions, such as receiving data and video transmissions, stripping (or extracting) the data from the video signal, screening and storing the data, providing user friendly interface controls and software, displaying menus and text, processing transactions, initiating telephone calls and transmitting billing data. Various hardware configurations may be utilized to achieve the desired functions of the home subsystem 258. For example, as shown in figure 6b, the home subsystem 258 can be configured to utilize the reception and channel tuning capability of the current installed subscriber base of cable converter boxes and televisions 601. The home subsystem 258 can also be designed as an advanced set top terminal converter box with menu generation capability, electronic memory and a telephone modem as described in section V below.

The electronic components which make up the home subsystem 258 can be arranged in a variety of ways. In the four unit subsystem of figure 6a the viewer 266 and library 262 are wired together while the remaining components communicate through RF transceivers 604. In a simple version of the home subsystem 258 there are only two units, a library 262 and a viewer 266. Figure 6b shows a two unit home subsystem 258 with certain optional features.

The viewer 266 is generally equipped with a high resolution viewing area 602, digital logic (including a key 605, security 606, and a microprocessor 621), video graphics control and memory 607, power supply circuitry (not shown), an optional battery 603 and an optional RF transceiver 604. In a two unit arrangement, the library 262 contains the connector function to the video distribution system 208, connector function to a public telephone communications system, and memory 600 (which may be removable and portable 600'). More specifically, the library 262 would include data stripping functions 617, digital logic 609, memory storage 600, power circuitry 610, optional telephone connections 611 (including cellular or PCN 611'), optional battery (not shown), optional tuner module 613 and an optional RF transceiver 604. The video connector 212 and the public telephone system connection 270, as well as the removable portable memory unit 600 of the library may be broken out into separate components. (Figure 6b shows a removable portable hard disk memory 600' with removable cartridges 614.) Therefore, the home subsystem 258 may have as many as five separate components which communicate with each other. The two, three, four or five separate components which make up the home subsystem can communicate with each other in a variety of ways, including hardwired connection 615, RF transceiver 604 and other wireless methods.

RF communications are preferred in the home because it allows separate components to be located throughout the home without restriction. The data communicated between the units is preferably secure data. In addition, the library 262 may provide power to the viewer 266 through the hard wire communication link 615.

Alternatively, a single unit may perform all of the home subsystem 258 functions. The single unit should use light-weight materials, including a light-weight battery. A single unit eliminates the need to communicate (externally) between units. The single unit is less expensive and eliminates duplicative processing, memory storage and power circuitry.

To receive and strip the data from the video signal at the consumer's home, either a cable interface device or cable connector 212 is used. The cable connector device includes a tuner 613, while the cable interface device makes use of existing tuning equipment in the home. In either configuration, data is stripped from the video signal and stored at the subscriber's location in the library 262. The phone connector 270, and modem 611 initiate telephone calls and transmit ordering and billing information to the Operations Center 250 or billing and collection system 278. A digital connector 619 is provided to communicate digital information with the set top 601. The home library 262 is the intelligent component of the home subsystem, incorporating the hardware and software necessary to store the text data, generate menus and effect the purchase transactions. In addition to an RF transceiver 604, the home library 262 also includes the necessary jacks and connections to allow the system to be connected to the viewer 266. As shown in figure 6b, the library 262 communicates the text data to the viewer in a secure format which requires a key 605 for decryption. The text is generally only decrypted page by page just before viewing.

### a The Video Connector

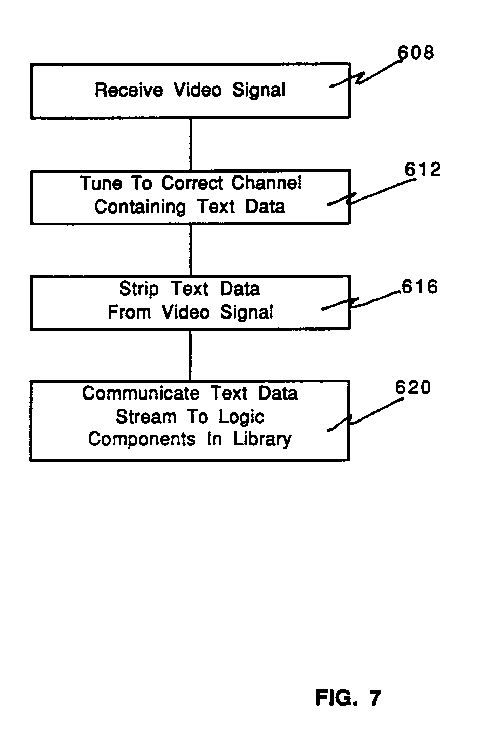

Figure 7 shows the flow of the processes performed by the video connector 212. The video connector receives the video signal 608, tunes to the channel containing the text data 612, strips the text data from the video signal 616, and communicates the text data stream to logic components in the library 620.

The connection to the video distribution system is preferably a cable connector to a cable television delivery system, as shown in Figure 6b. The cable connector includes a data stripper circuit 617, which accepts video input from either a set top converter, TV or VCR 601, or an optional tuner block 613 that receives the CATV signal through the cable connector 212'. The data stripper circuit 617 strips data out of the video, and outputs a digital bit stream to the digital logic portion 609 of the library unit 262. The data is embedded in the video signal either in the vertical blanking interval or the active video portion in an encrypted and compressed format. The data stripper circuit 617 can be placed inside the set top converter box 601, TV, or in the library unit. The data stripper circuit 617 outputs the digital bit stream to be used by the library digital logic 609.

The video connector 212 may also contain a channel tuner module 613 that can tune to the video channel and provide access to the video that contains the data to be stripped. Using the optional tuner module 613, a set top converter, VCR, or TV tuner is not needed in the home subsystem. The optional tuner module 613 would instead receive the CATV signal directly through the cable connector 212.

### b. Library

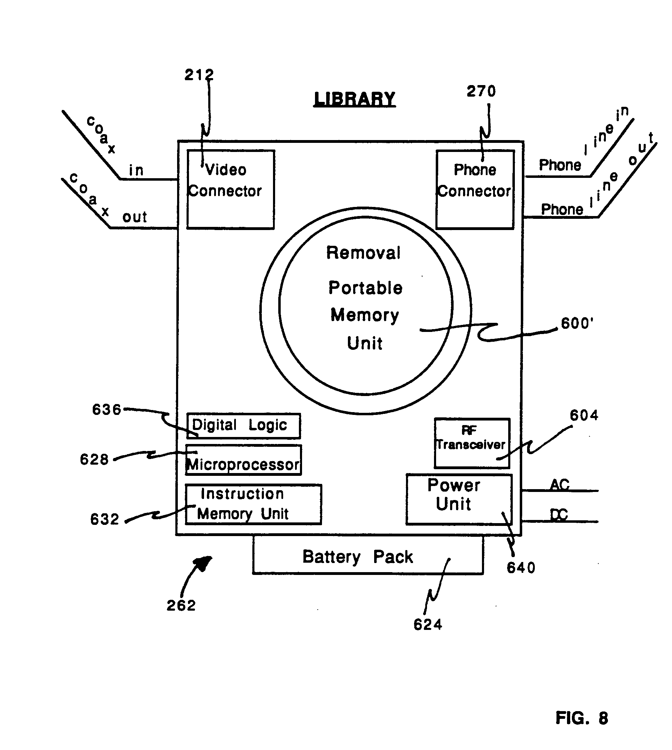

An embodiment of the library 212 for a two unit home subsystem is shown in both Figure 6b and Figure 8. The embodiment shown includes the following optional parts the video connector 212, phone connector 270, RF transceiver 604, and battery pack 624 in addition to a removal portable memory 600', microprocessor 628, instruction memory unit 632, digital logic 636, and power unit 640.

The library 262 contains a digital logic section 609 (not shown in Figure 8) which includes the microprocessor 628, the digital logic 636 and the instruction memory unit 632. The microprocessor 628 is preferably a secure microprocessor such as the Mot SC21 device sold by Motorola. The digital logic section 609 will receive the serial digital bit stream from the data stripper circuit 617 and process the data. Error correction will also be performed by the digital logic section 609 and the data will be checked for proper address. If the address of the data is correct and the library 262 is authorized to receive the data, the data will be transferred to the memory storage unit 600, 600'. Authorization to receive the data is provided by the cable headend or another distribution point. An authorization code may be sent in the serial digital bit stream. The digital logic section 609 will send appropriate text and graphical data to the memory storage unit 600, 600'. It transfers this data in a compressed and encrypted format and the data remains stored in a compressed and encrypted format.

### i. Memory Storage Unit

The memory storage unit of the library is preferably a removable portable memory unit 600' (as shown in figures 6a, 6b and 8). A variety of options are available for memory storage: a hard disk drive, such as an 80 megabyte, a 200 megabyte, a hard disk with removable platters, and CD ROM. Referring to figure 6b, a hard disk drive unit 600' which contains removable platters may also be used. This would provide virtually unlimited library storage capacity. Data will be stored in the memory storage unit in a compressed and encrypted format. As is also shown in figure 6b, the data will also contain a key or unique ID number that matches the ID or key of the viewer 266. This matching of a unique key or ID number prevents unauthorized transfer of text data from the memory storage unit to an unauthorized viewer. Small memory devices such as smart cards, electronic memory cards or PCM CIA cards (personal computer memory card industry association) may also be used to store the data.

### ii. Power Circuitry

As shown in figures 6b and 8, the library 262 will accept power from either AC wall power 610, DC power 640, or optional battery power 624. It is preferred that the power circuitry 610, 640 provide all the voltage necessary from either the battery 624 or AC unit for the various circuitry in the library. Preferably the power circuitry 610, 640 will also provide power to the viewer through a single data cable when connected to the viewer. The power circuitry 610, 640 will recharge the battery using AC power when in operation. With the optional battery unit 624 installed, the library 262 becomes a portable unit and can still provide power to the viewer 266. In order to extend battery life, power conservation measures may be utilized, such as shutting down the memory system when not in use. When the viewer unit 266 is being utilized and the library circuitry is not being utilized, virtually all power may be shut down to the library 262.

### iii. Connection to the Public Telephone System

The connection to the telephone system is preferably provided by a modem 611. Various available modems may be used to perform this function. As shown in figure 6b, cellular phone or PCN phone connections 611' may also be provided. When the home subsystem 258 is first initialized, the modem will be used to transfer the name and credit card information of the consumer to the billing and collection subsystem 278. The telephone connection 270 may be utilized each time a book is purchased by a consumer to complete and record the transaction. The telephone connection 270 may also be used as a means for receiving the text data from the operations center 250, by-passing the video distribution system 208. The phone connection 270 may be a separate unit as shown in Figure 6b.

### iv. Library Processing

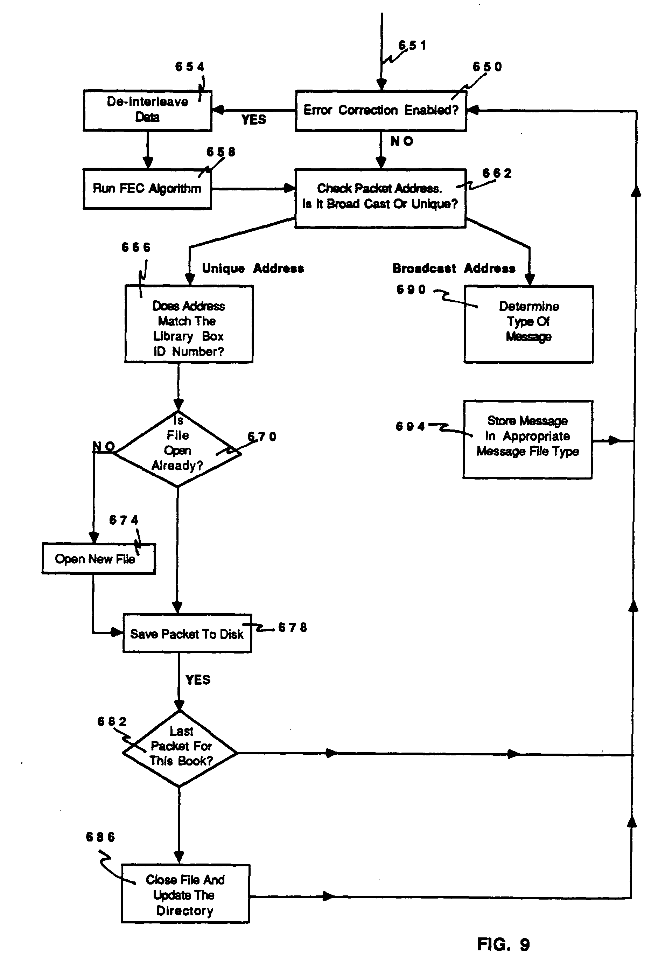

Figure 9 shows an example of some basic processing performed by the library 262 on the data stream 651 received from the video connector 212 or stripper circuit 617. First the data stream 651 is checked for error correction by block 650. If an error is detected, block 654 de-interleaves the data followed by block 658 running a FEC (Forward Error Correcting) algorithm. The combination of block 650, 654 and 658 perform the error correction needed on the data stream. If no error correction is necessary the data proceeds to block 662 where packets are individually checked for packet address.

If the address is a unique address, block 666 checks whether the address of the packet matches the library box ID number. The library box ID number is a unique number associated with that library 262 which is used to ensure security of the data. Block 670 determines whether an electronic file has already been opened into which the data packet can be saved. If no data file has been opened then block 674 opens a new data file for that packet. If an electronic file has been opened, then the packet is saved in that electronic file on disk, block 678. Next, the process checks to see if this is the last packet for a particular book for a particular textual data block being received 682. If it is the last packet of information, then the electronic file is closed and the directory of available electronic files is updated 686. Following either block 682 or 686, the process returns to receive another data packet from the data stream received from the data stripper block.

If the packet address is checked and the address is determined to be a broadcast address, the process determines the type of message that is being sent 690. The message may be an index of book titles, menu (and menu graphics) information, announcements, special offerings, discounts, promotions, previews etc. The message is then stored in appropriate electronic message file 694 and the process is returned to block 650 to receive another data packet and perform another error check.

Using the process of Figure 9, the library 262 is able to receive. store and update directories related to the textual data and graphical data (that can be used to depict pictures in a given book or to generate menus). Variations of the processes are possible depending on the format of the data and operating system of the library 262.

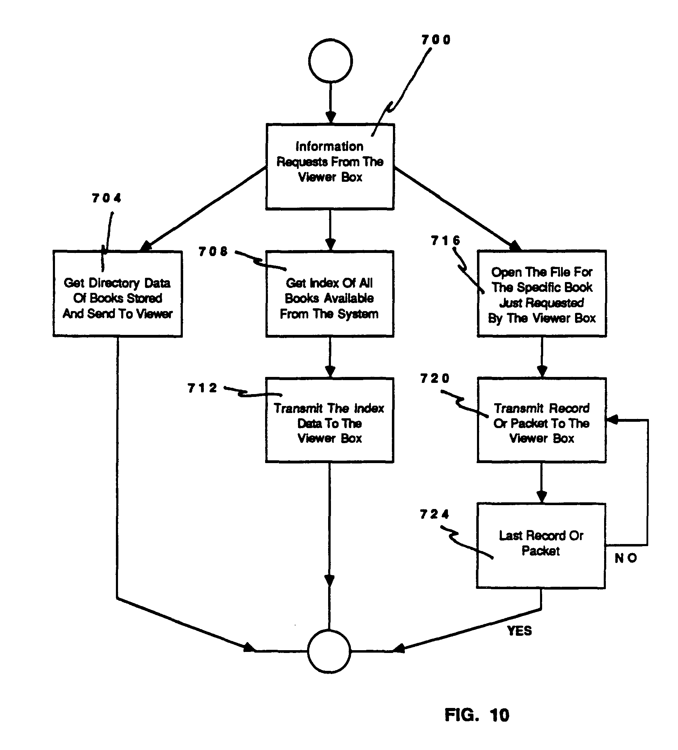

Figure 10 shows an example of the processing of information requests from the viewer 266 at the library 262. Information requests from the viewer 266 are received either through the cable connecting the viewer 266 to the library 262 or through wireless transmissions such as RF. It is possible in some embodiments for subscribers' requests to come from a set top converter box 602 (see Section V).

Information requests received from the viewer 266 generally fall into three categories: (1) directory data of books stored in the library 262, (2) index of all available books on the system, and (3) requests for a specific book (Block 700). Process block 704 answers a request from the viewer 266 for a directory of data showing the books stored at the viewer 266. The directory of data is sent to the viewer 266 so that it may be displayed to the subscriber. Process block 708 handles requests from the viewer 266 for an index of all available books on the system. The library 262 will obtain an index of all the available books on the system and transmit that index, process 712, with menu information to the viewer box. Process block 716 replies to a request from the viewer 266 for a specific book. The library 262 opens an electronic file for the specific book requested by the viewer 266 and transmits the record or transmits the information on a packet-by-packet basis to the viewer, 720. This process of transmitting the specific book, record, or packets to the viewer continues until the last record or packet has been sent, 724.

In addition to the processes shown on Figure 10 in handling a request for a specific book, the library 262 also orders and receives specific books from the operations center 250 using the process as described in process block 716. Following a request for a specific book which is not stored at the library 262, the library 262 will proceed to determine the next available time the book will be on the video distribution system 208 and ensure reception and storage of that book (process not shown). In performing this process the library 262 will transmit to the viewer information on when it will obtain the text data for the book so that the subscriber may view the book. In addition to timing information, price and other ordering information may also be passed by the library unit 262 to the subscriber.

### c. The Viewer

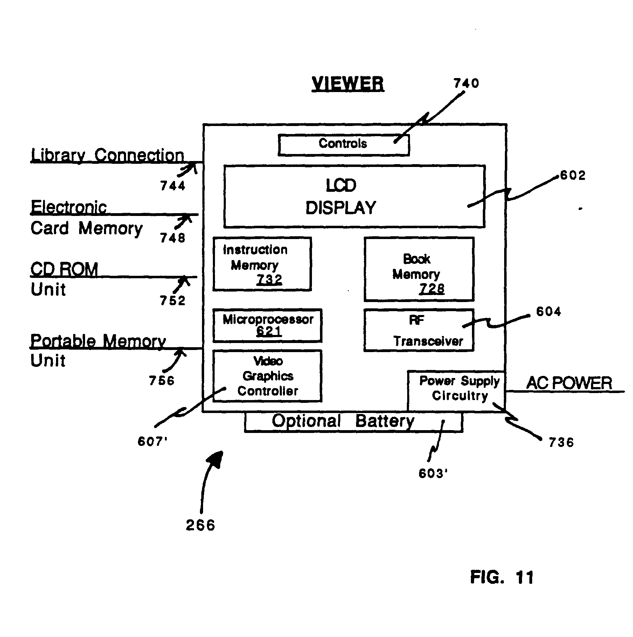

Figure 11 is a block diagram of a viewer 266 showing its internal components. The viewer 266 of Figure 11 is similar to the viewer 266 depicted in Figure 6b. The viewer 266 is designed to physically resemble a bound book. The viewer 266 is made up of five primary components and four optional components: (1) LCD display 602, (2) digital circuitry (not shown), (3) video graphics controller 607', (4) controls 740, (5) book memory 728, (6) optional power supply circuitry 736, (7) optional battery 603', (8) optional RF transceiver 604, and (9) optional cellular or mobile communicator (such as 611').

(1) A high resolution LCD screen 602, preferably of VGA quality, is used by the viewer 266 to display text and graphic images. The screen is preferably the size of one page of a book. A two page screen or two screens may also be used with the viewer 266.

(2) Digital circuitry that includes a secure microprocessor 621, instruction memory 732, and digital logic. Data is transferred to the viewer 266 in compressed and encrypted format. The secure microprocessor 621 compares the ID number of the viewer 266 with the incoming data stream and only stores the text data if the ID number of the viewer 266 matches that within the incoming data stream. It is preferred that the viewer 266 not output text data or other data and that the data is decompressed and decrypted only at the moment of viewing and only for the current page being viewed. These measures are preferred because they provide additional security against unauthorized access to data.

(3) A video graphics controller 607' that is capable of assisting and displaying VGA quality text and graphic images is included in the viewer 266. The graphics controller 607' is controlled by the digital circuitry described above. Text may be displayed in multiple font sizes.

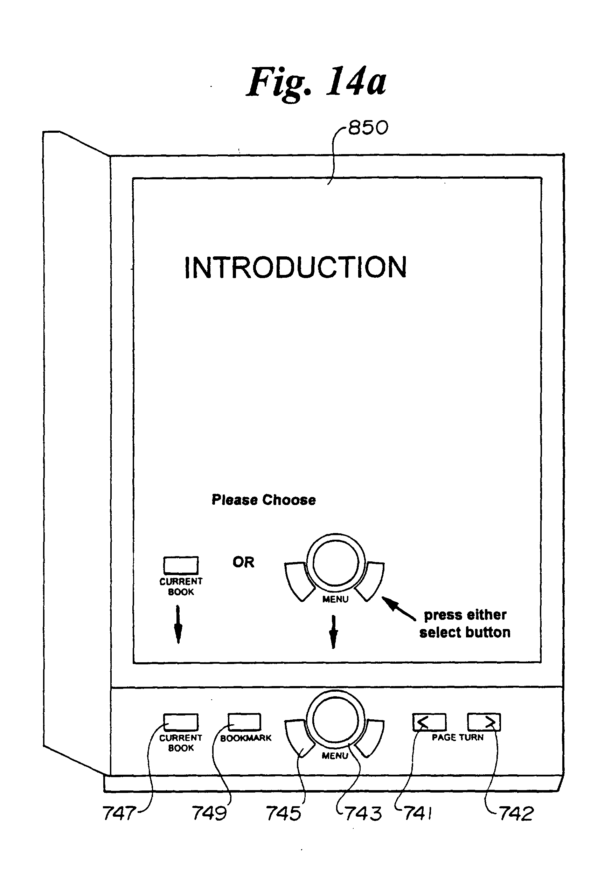

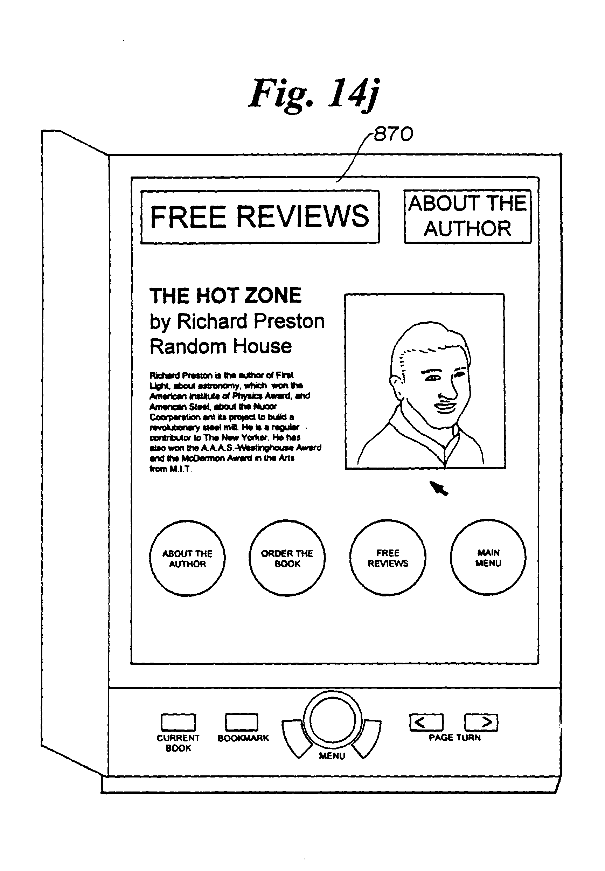

(4) The viewer 266 of Figure 11 has touch panel controls 740. These unique and novel controls 740 allow the consumer to select stored books and books from catalogues, move a cursor, and turn pages in a book. Typically, the preferred controls 740 include forward and reverse page buttons 742, 741, a ball 743 for cursor movement, one or more selection buttons 745, a current book button 747 and a bookmark button 749 (see Figure 14a).

The controls 740 should be easy to use and conveniently located. Referring to Figure 14a, the controls for the viewer 266 are preferably located below the screen 602 at the bottom portion of the viewer 266. The next page turn button 742 is the most used button 740 and is preferably located towards the right edge of the page. The subscriber is likely to use right hand thumb movements to work the controls particularly the page turn buttons 741, 742. Therefore, it is preferred that the buttons be arranged in such a manner that the buttons are easily controlled by a subscriber's right thumb. Generally, this can be accommodated either on the lower portion of the viewer 266 (as shown) or along the right hand margin of the viewer 266 (not shown). The current book button 747 and bookmark button 749 are usually the least used of the controls 740. Therefore, in the example shown those buttons 747, 749 are located on the inside portion towards the binder of the viewer 266.

Locating the ball 743 or other cursor movement device (such as four pointer arrows not shown) in the bottom center of the viewer 266 is both easier for the subscriber to use and easier in manufacturing the viewer 266. The selection buttons for the cursor 745 are preferably located below the middle diameter of the cursor ball 743 on the right and left sides of the ball as shown. If pointer arrows are used for cursor movement, a selection button 745 may be located in the center of the four arrow buttons (not shown). Again, the most used controls 740 should be located where a subscriber's right hand thumb would normally rest.

(5) Book memory 728 for at least one book or more of text is included in the viewer 266. The memory 728 stores text and any graphics which represent pictures in a book. The memory 728 can also store menu graphics data. Two different memory 728 devices may be used in the viewer 266, one for the instructions for the microprocessor 621 in the digital circuitry and a second type of memory may be used for the book memory 728 (and graphics). Various memory devices available on the market may be used such as, ROM, RAM or a small hard disk. Since a book requires approximately 0.6 megabytes of storage, a small hard disk providing approximately 60 MBytes of storage provides memory to store approximately 100 books.

Text for books may be displayed in various font sizes. To accommodate various fonts for display, a variety of fonts are stored in instruction 732 or book memory 728. Thus larger or smaller fonts may be recalled from memory 621, 728 to create displays desired by the subscriber.

(6) Power supply circuitry 736 in the viewer 266 will accept power from either an AC power source or from an optional battery 603', or the library 262. The power supply circuitry 736 provides the necessary voltages to accommodate the various systems within the viewer 266.

(7) An optional battery 603' is provided in the preferred embodiment. The battery 603' is automatically recharged when AC power is available.

(8) An optional RF transceiver 604 which provided two-way data link between the viewer 266 and other components of the home subsystem can also be included in the viewer 266.

(9) Also, the viewer 266 may include a cellular transceiver (not shown) for mobile communications.

The viewer 266 of Figure 11 has parts available for providing connections to: a library 744, electronic card memory 748, CD ROM units 752, and a portable memory unit 756 (such as that shown in Figure 6b 600'). Various electronic memory cards such as PCM CIA can be used with this viewer 266.

Security, low power consumption and excellent display technology are desired features of the viewer 266 design. The viewer 266 should be lightweight and portable. The viewer 266 contains a software operating system that allows books to be stored, read and erased and includes the capability to order books and retain them in memory 728 for a predefined period of time determined by the system operator. The software can be configured to allow the book to be read during a period of time (i.e., two weeks) and then automatically erased, read once and erased, or held in memory permanently. Each viewer 266 has a unique key 605. All of the data storage is encrypted with the key 605 for an individual viewer 266 to prevent more than one viewer device 266 accessing the text file or book file.

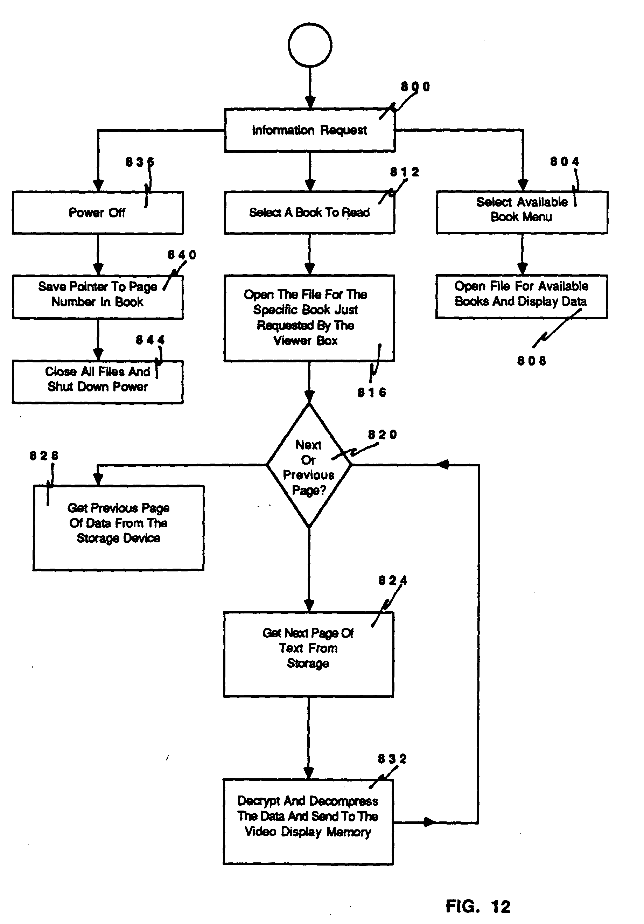

Figure 12 is a flow diagram of some of the processes executed by the viewer 266. Generally, the viewer 266 receives inputs from the subscriber through touch panel controls 740. The subscriber's information requests are then processed 800 by the viewer 266.

If the subscriber requests a menu of available books, process block 804 will select a book menu. Process block 808 will open the electronic files which list the books that are available (related to the category of topic of the menu) and display the menu with the names of the available books.

If the subscriber selects a particular book to read, then process block 812 will process the selection and determine the electronic file that contains the specific book. Process block 816 will open the file for that specific book and normally access the first page. (If a pointer has already been set in that books electronic file, the process may default to that page.) Process block 820 will then determine which page needs to be displayed. Process block 820 will determine whether a next page, previous page or a bookmarked page needs to be displayed. If the pointer for the electronic file is not in the correct location then process block 828 will move the pointer and obtain the previous page of data from the stored file. Otherwise, process block 824 will normally obtain the next page of text from the stored electronic file. Process block 832 will decrypt and decompress the text data and send the data to the video display. The video display will generally have a video display memory associated with it and process block 832 will send the data directly to that video display memory. The circuitry for the display then completes the process of displaying the page of text.

If the subscriber, through the controls 740, requests (from process block 800) that the power be turned off, then the process, 836, of turning the power off will be initiated. Process block 840 saves the pointer in memory to the page number in the book that the viewer 266 is currently reading. Process block 844 closes all the electronic files and signals the power circuitry to shut down the power to the various circuits in the viewer 266. With these examples of basic processes the viewer 266 is able to display book selections and display text from those books.

### d. Menu System

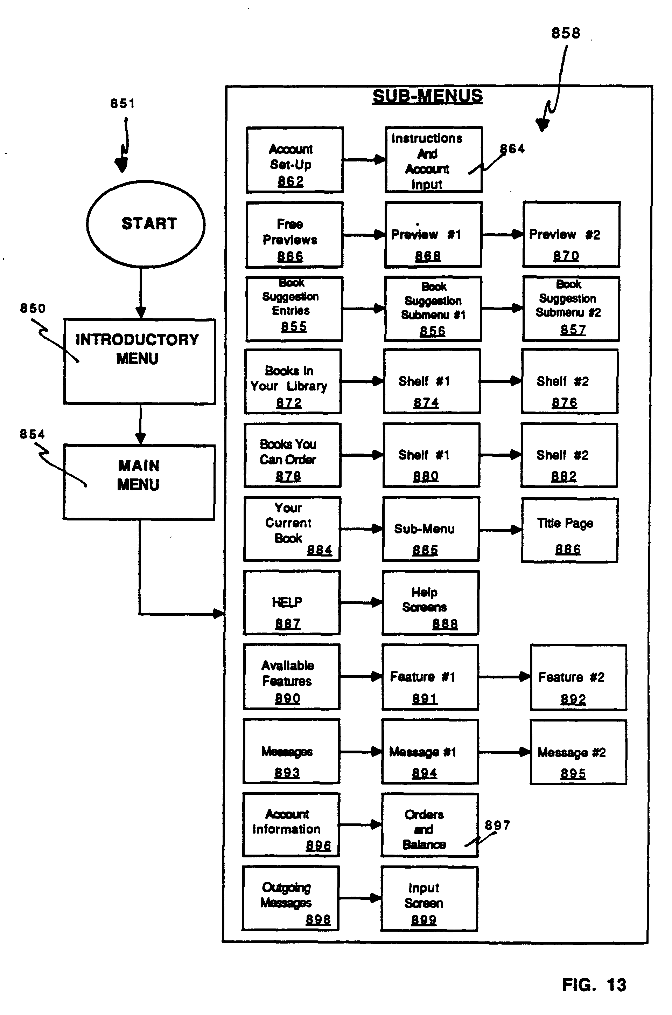

Referring generally to Figure 13, it is preferred that the electronic book system 200 have a menu system 851 for selecting features and books from the electronic book system 200. The operating software and memory required for the menu system 851 is preferably located at the viewer 266 (e.g., the instruction memory 732 and/or book memory 728). However, it can also be located at the library 262 (e.g., the instruction memory 632) or the library 262 and the viewer 266 can share the software and memory needed to operate the menu system 851. Since the menus are usually displayed on the viewer 266 and it is preferred that the viewer 266 be capable of operating in the absence of the library 262, the basic software and memory to create the menus is more conveniently located at the viewer 266.

The preferred menu system 851 is a system which allows sequencing between menus and provides menu graphics for graphical displays such as on the LCD display 602 of the viewer 266. In a system which uses a set top converter these menus may also be displayed on a television screen. In the simplest embodiment, the menus provide just basic text information from which the subscriber makes choices. In more sophisticated embodiments, the menus provide visual displays with graphics and icons to assist the subscriber.

Figure 13 depicts a menu system 851 with sequencing. The primary menus in the system are an introductory menu 850, a main menu 854 and various submenus 858. In the embodiment shown, there are three levels of submenus 858. In certain instances one or two submenus 858 is sufficient to easily direct the subscriber to the selection or information requested. However, there are features in which three or more submenus 858 make the user interface more friendly for the subscriber. Each level of submenus 858 may consist of multiple possible menus for display. The particular menu displayed depends on the selection by the subscriber on the previous shown menu. An example of this tree sequence of one to many menus are the help submenus 887, 888. Depending upon the specific help requested, a different level two help menu is displayed to the subscriber.

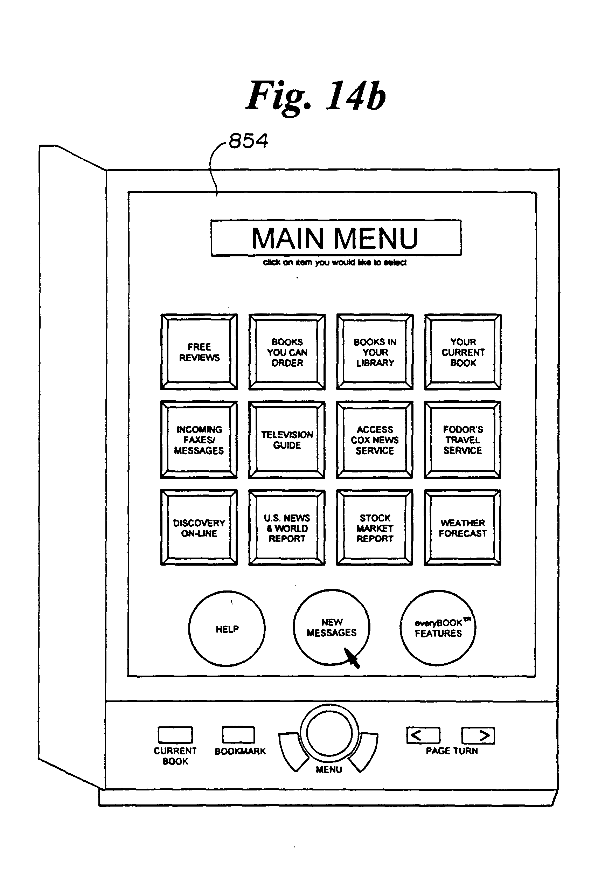

An example of an introductory menu 850 is shown on Figure 14a. Generally the introductory menu 850 introduces the viewer 266 to the system and provides initial guidance, announcements and instruction. The introductory menu 850 is followed by a main menu 854, an example of which is shown in Figure 14b. The main menu provides the viewer 266 with the basic selection or features available in the system. Figure 14b is an example of a main menu 854 offering many additional features and submenus 858 to the subscriber. For example, Figure 14b shows that the viewer 266 is able to choose by a point and click method, many options including: (1) free previews, (2) books you can order, (3) books in your library, (4) your current book, (5) help, (6) on-line services and (6) other system features. Following a selection on the main menu 854, a corresponding submenu 858 is shown.

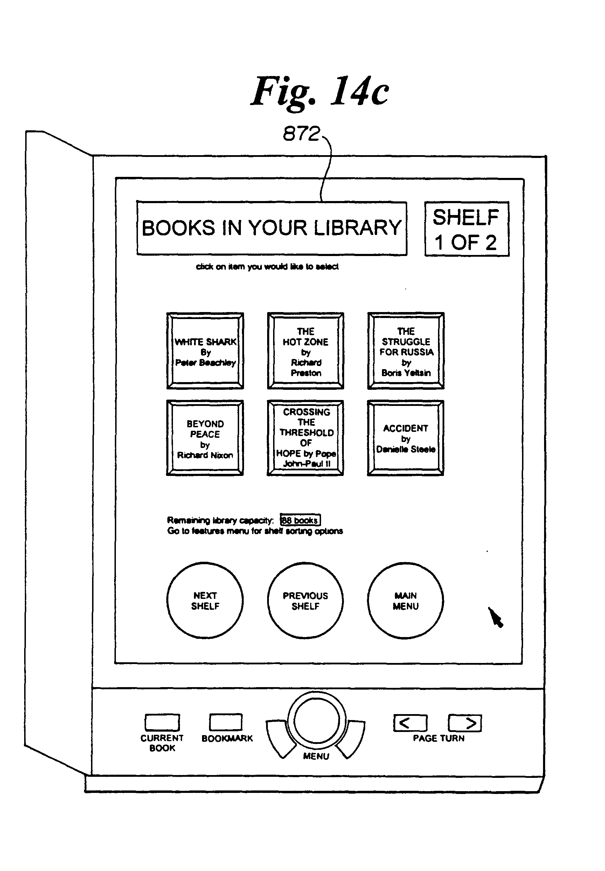

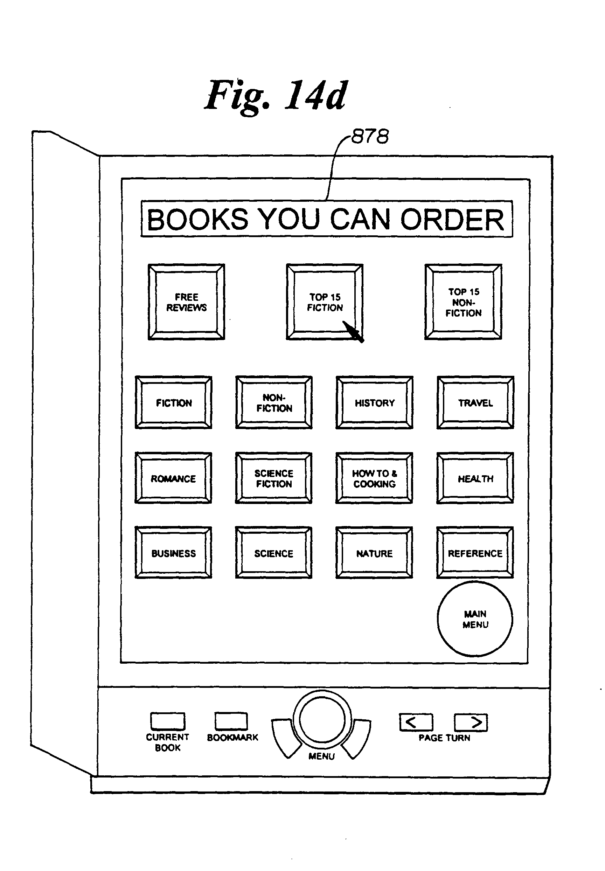

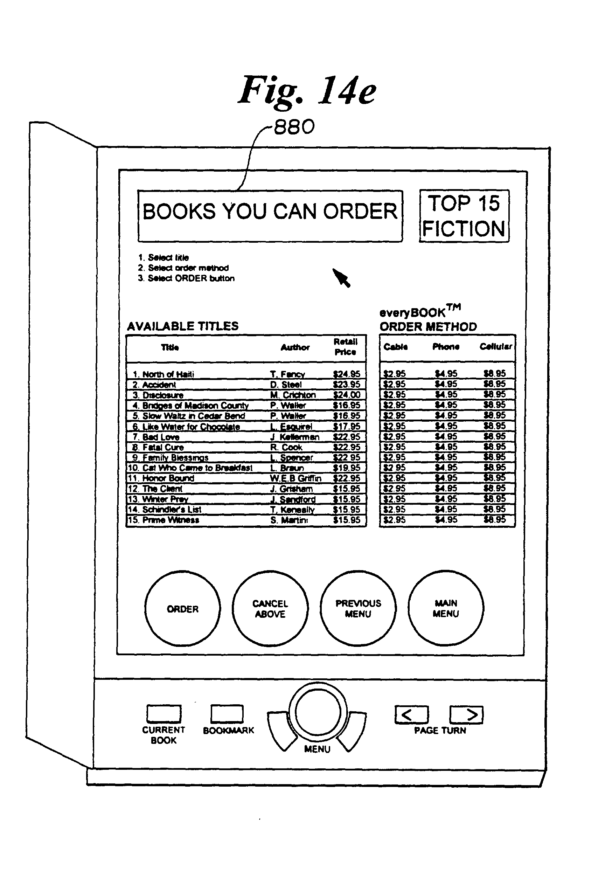

Figure 13 shows eleven available primary or first level submenus. They are (1) account set up 862, (2) free previews 866, (3) book suggestion entries 855, (4) books in your library 872, (5) books you can order 878, (6) your current book 884, (7) help 887, (8) available features 890, (9) messages 893, (10) account information 896 (11) outgoing message submenu 898. Figure 14c is an example of a first level submenu for books in your library 872. This "Book In Your Library" example submenu 872 shows six available books by title and author and provides the subscriber with the ability to check a different shelf of books 874 or return to the main menu 854. Figures 14d and 14e show example submenus 858 for books that may be ordered using the "Books You Can Order" submenu 878.

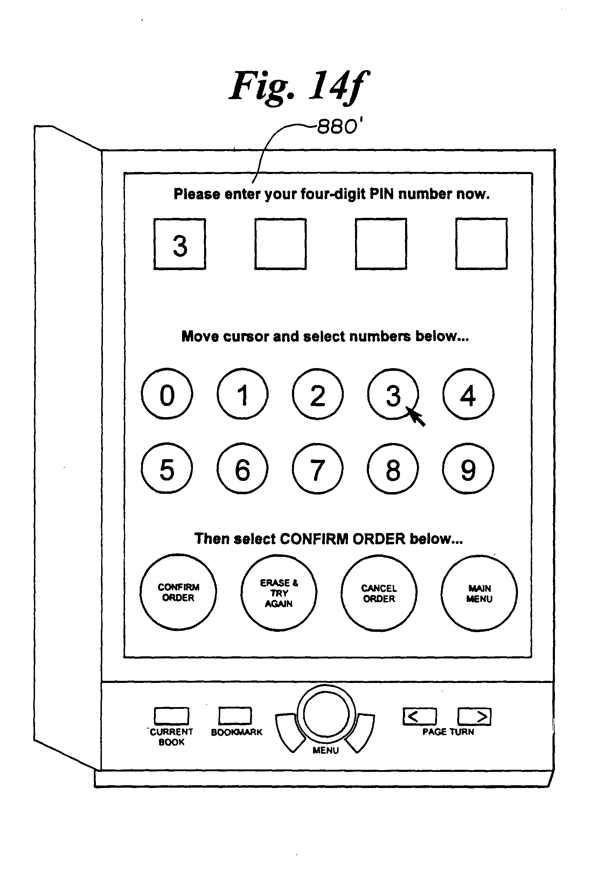

Figure 14f is an example of a confirmation menu which confirms a subscribers order. In this particular example, the subscriber is required to enter a PIN number to complete the subscriber's order. Any alphanumeric or similar password may be used to ensure the subscriber is an authorized subscriber. In the preferred embodiment, the subscriber confirms an order with a PIN or password and then receives a final confirmation screen. The final confirmation screen is primarily text and may state:
**Your book order is now being processed via CABLE.**
**Your book will be delivered overnight and your VISA account will be charged $2.95.**
**Your book will be available for reading at 6:00AM EST tomorrow**.
**Make sure that:**
   **1. your Library Unit and Cable Connection Unit are plugged in with aerials up tonight; and**
   **2. you tune your cable converter to THE BOOK Channel. The TV set does not have to remain on.**
or similar language.

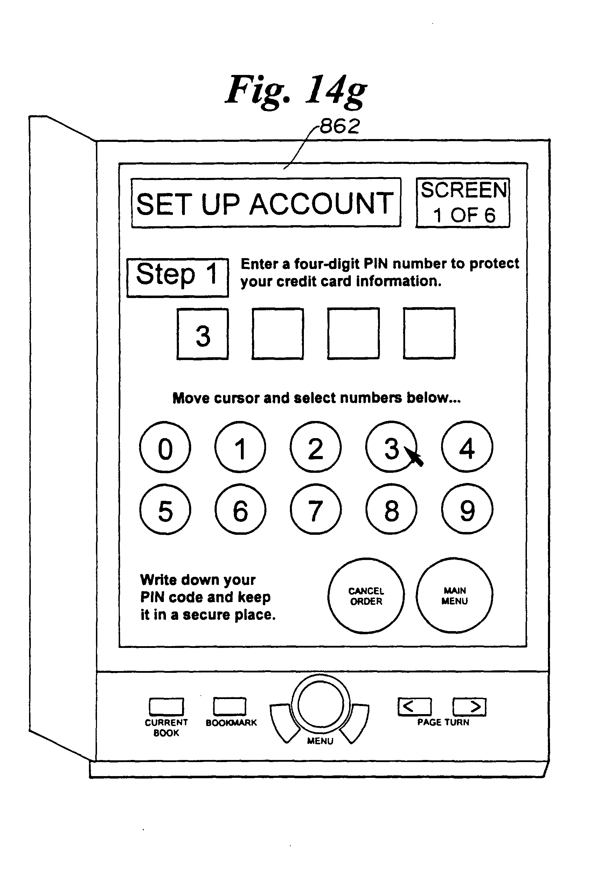

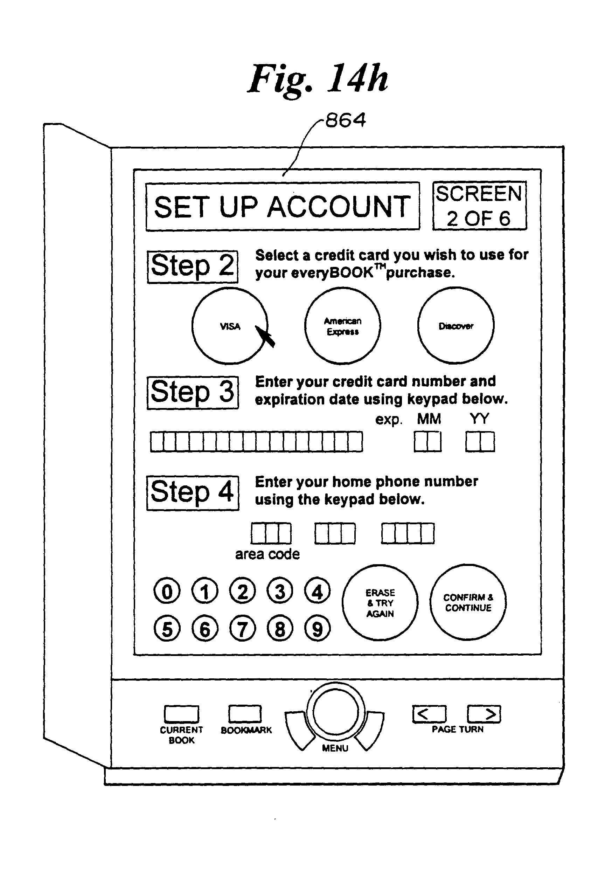

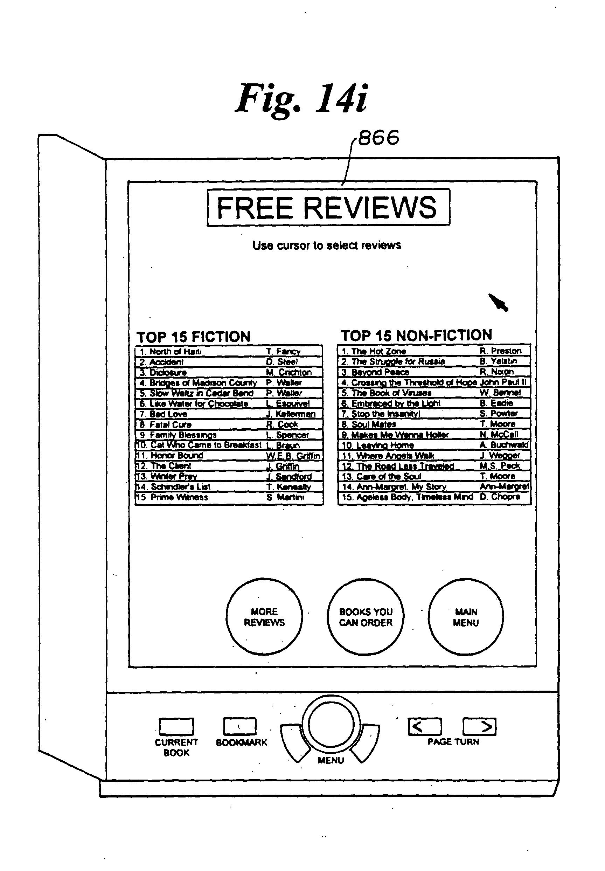

Examples of the "Account Set Up Menu" 862 and further submenus 858 related to account set up (which provide instructions and account input 864) are shown in Figures 14g and Figure 14h. These submenus 858 allow initialization of an account at the operations center 250 and orders to be charged to credit cards. The submenus 858 include the ability to enter data related to your desired PIN number or password, credit cards, phone numbers, etc. It is preferred that the account set up be performed using the telephone system. A confirmation menu verifies that the account has been properly set up with the desired PIN or password and credit card.

Free previews for books 866 are also provided by submenus (868, 870). Examples of the free preview menus are shown in Figure 14i and Figure 14j. Figure 14i shows a menu depicting various books for which previews are available for viewing. Following a book selection, a screen submenu showing an excerpt of the selected book cover's description is provided along with an excerpt from a critic's review of the selected book. In the preferred embodiment, this preview screen for a particular book also allows the subscriber to select a submenu which provides information about the author. The book preview submenu may also include a still video picture or graphics portraying a book cover or a scene from the book. An example of such a still video picture or graphics is shown in figure 14j which depicts a preview screen 870 about the author. The author's preview screen 870 shows a picture of the author, provides a short biography, and may allow the subscriber to order the author's books. The price for ordering the authors various books may also be shown on the menu.

In addition to free previews, in more sophisticated embodiments. the system provides the subscriber with a book suggestion feature (see 855). This is accomplished using the menu system 851 and the processor with associated memory located at the viewer 266, library unit 262 or at the distribution point (1020 or 250). When necessary, information for the program suggestion feature is sent in the text data. of the composite or video signal to the home subsystem 258. With this feature, books or authors are suggested to a subscriber based upon historical data of the subscriber's previous orders, demographics or mood of the subscriber, other indicators, and/or by text word searches.

In the preferred book suggestion embodiment, text word searches of preview information (such as book cover descriptions, critics reviews and biographies about the author) and/or text of books or other titles are performed by the library unit 262 using databases stored in the library memory 600. Personalized book or author suggestions are made to the subscriber by obtaining information from the subscriber indicative of general subscriber interests. Subscriber entries are solicited from the subscriber preferably using the book suggestion entries submenu 855. The system uses these subscriber entries either directly or indirectly to search for books or authors to suggest to the subscriber.

Generally, the book suggestion methods may be categorized into two categories, either responsive methods (which respond to a series of subscriber menu entries), or intelligent methods (which analyze data to suggest a book). Using a responsive or intelligent method, the system 200 determines a list of suggested titles or authors and creates a second or third level submenu 856, 857 to suggest the titles for subscriber selection.

Responsive methods of suggesting titles include, for example, the use of mood questions, searching for authors, and keyword searching. Using the instruction memory 732 and menu generation hardware (e.g., 607) of the viewer 266, a series of mood questions can be presented on menus to determine a subscribers interest at a particular time. For this methodology, the operations center's 250 processor 404 and instruction memory 416 assign each title mood indicators (and subindicators) from a group such as light, serious, violent, short, long, dull, exciting, complex, easy-read, young theme, old theme, adventure, romance, drama, fiction, science-fiction, etc. These indicators are sent to the home subsystem 258 with the text data and are stored in library memory 600. Based upon the subscriber entries, the processor associates a set of indicators with the subscriber's request and a set of books with matching indicators are located for suggesting to the subscriber.

Responsive searches for authors or keywords (a search word provided by the subscriber) are generally performed by the library processor 628 and instruction memory 632 on data stored in the library's memory storage 600. For example, a keyword given by the subscriber may be searched for a match in library memory 600 storing the book reviews, critics and previews databases. Thus, if a subscriber provided an entry of the word "submarine" on an appropriate submenu, the title "Hunt For Red October" may be located by the library processor 600 using instruction from a routine in instruction memory 632.

Intelligent methods of suggesting programs include analyzing personal profile data on the subscriber and/or historical data about the subscriber such as past books ordered by the subscriber (or buy data). This method is preferred in a book on demand system and can be performed at the distribution point or operations center 250 by the onsite processor 404 using subscriber databases stored in memory 428. The home subsystem 258 receives the text data including program suggestion information from the distribution point or operations center 250 and generates the program suggestion submenus 855, 856, 857 using the same text data receiving 212 and viewer menu generation hardware (e.g., 607, 621) described above. Software routines and algorithms stored in instruction memories (e.g. 632, 732) are used to analyze historical data and book ordered data to determine a line of books to suggest to the subscriber.

The algorithms for this powerful feature of suggesting books or authors to subscribers is disclosed in great detail in WO 94/14284.

Referring to Figure 13, submenus 858 are shown on the "Books In Your Library" submenu 872 and are preferably broken into shelf numbers with submenus for each shelf 874, 876. The submenus 858 for the "Books You Can Order" submenu 878 is similarly broken out into submenus by shelves 880, 882. These shelves may each be a category or genre of books. Books may be grouped into categories such as best sellers, novels, fiction, romance, etc. See Figure 14d.

Referring to Figure 13, the submenu 858 for "Your Current Book" 884 allows a subscriber to select a current book 884 and then determine what page to view. This selection is confirmed with a level two submenu 885. The help submenu 887 provides the subscriber with additional help screens 888. The submenus 858 for available features 890 are preferably broken out into a sequence of separate submenus for each feature 891, 892.

Referring to Figure 13, messages can also be sent with the electronic book selection and delivery system 200. A level one message screen provides the subscriber with the ability to select from various messages the subscriber has pending 893. Each message is then shown on a separate submenu screen 894, 895. The message may contain text and graphics.

Referring to Figure 13, account information is shown on a level one submenu 896 and then follow-on submenus 858 show the recent orders and your account balance 897. There is also a level one submenu for outgoing messages 898 which has a follow-on submenu used as an input screen 899.

In addition to the specific features and submenus described in Figure 13 and Figure 14a through Figure 14j, many other variations and features are possible. When a book is finally selected for viewing the title page 886 will appear on the screen followed by a page of text.

### III. The Billing And Collection System

The billing and collection system 278 (shown in Figures 2 and 3) utilizes the latest technology in electronic transaction and telephone switching to track orders, authorize deliveries, bill consumers, and credit publishers automatically. The telephone calls initiated by the phone connector 270 are received by the billing and collection system 278 which responds immediately without human intervention by placing the order and charging the consumers credit card account. Data is compiled periodically and publishers 282 are credited for sales of their books or other text. The billing and collection system 278 may also connect with subscribers through two-way cable connections, cellular, or other communication means.

It is preferred that the billing and collection system 278 communicate with the operations center to track changes in available books and to provide statistical data to the operations center 250.

### IV. Public Library. School, and Bookstore System

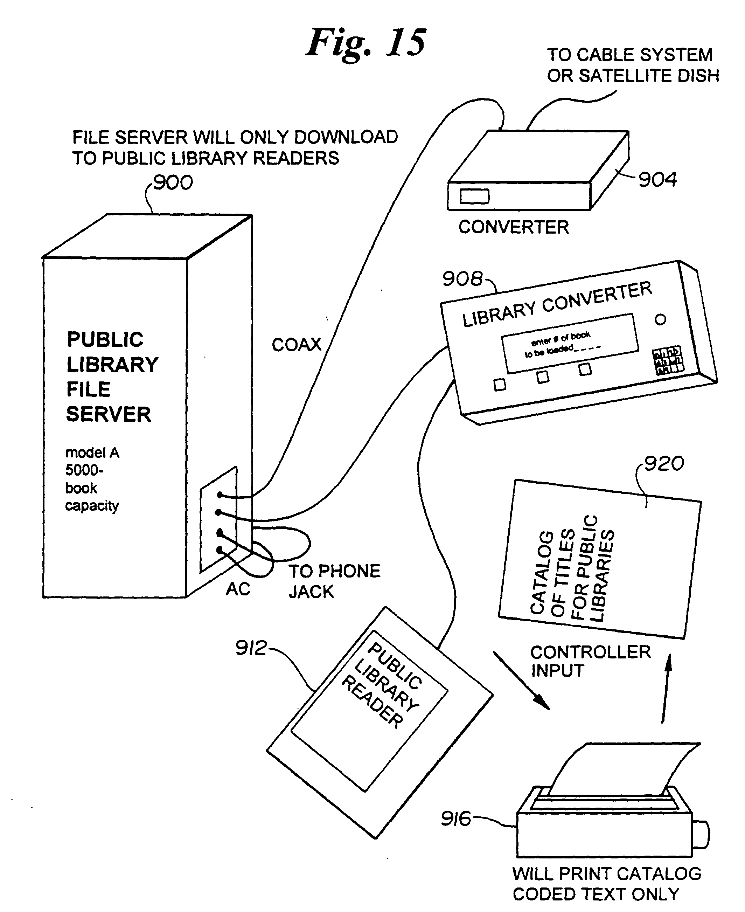

The electronic book system can be modified to be used at public libraries, schools and bookstores. Figure 15 shows one possible arrangement of components for a public library, school or bookstore location. The main unit at a public library, school or bookstore is the file server 900. The file server 900 is a large electronic memory unit that can store thousands of books. Various electronic storage means may be used in the file servers, such as hard disks, read-write CD ROMs and read-only CD ROMs.

The system comprises five components; the file server 900, a converter or video connector 904, a controller 908, a viewer 912, and a catalog printer 916. The software for controlling the system is primarily located in the controller 908. The converter or video connector 904 is similar to those described above. In this configuration the controller unit 908 monitors the data being transferred to the file server 900 by the converter 904. The controller 908 is preferably provided with a viewing screen and several control buttons. When it is necessary to have a larger screen to perform more sophisticated controlling of the system a viewer 266 may be connected to the controller 908 and the viewer screen and controls 740 may be used.

The controller 908 is only able to download books to public viewers 912 which are authorized to receive books from the particular file server 900. For security reasons it is not desirable that the public viewer 912 have access to more than one file server 900. In this way, security can be maintained over the text data for books. It is preferred that the public viewer 912 be limited to receiving one or two books at a time from the controller 908. When the user of the public viewer 912 needs a new or additional book, the user returns the viewer 912 to the school or public library where the user receives a new book from the controller 908.

In order to track the books that are available on the file server 900, the titles of the available books may be printed on a catalog printer 916. The catalog printer 916 is connected to the library controller 908 and the titles of the books are downloaded to the catalog printer 916. None of the coded text for any of the books can be printed using the controller 908 and catalog printer 916 of this system. In order to maintain security over the data, none of the book data is allowed to be downloaded to the printer 916. Once a complete printout of available book titles, magazines, or other textual material is complete, a hard copy of the catalog 920 can be maintained at the file server 900.

The system shown may also be used at bookstores. The bookstores can rent the public viewer 912 to customers with the text for one or two books loaded onto the public viewer 912. The public viewer 912 may be provided with an automatic timeout sequence. The timeout sequence would erase the textual data for the books after a certain period of time, for example, two weeks. It is expected that after a period of time (perhaps within two weeks) the renter would return the public viewer 912 to the bookstore and receive additional books for viewing. Using this arrangement, it is also possible for the bookstore to (permanently) sell a viewer 912 to a regular customer. The customer then returns to the bookstore from time to time to receive textual data for a book which the customer can then store permanently on the customer's own viewer 912. Various other configurations are possible for bookstores, schools and public libraries using the file server 900 and public viewer 912 described.

### V. Use Of Set Top Converter

Existing set top converter boxes such as those made by Scientific Atlanta or General Instruments are presently unequipped to handle the book selection system of the present invention. Although set top converters may be built which include the library functions, hardware modifications are necessary in order to use the book selection system with existing set top converter technology.

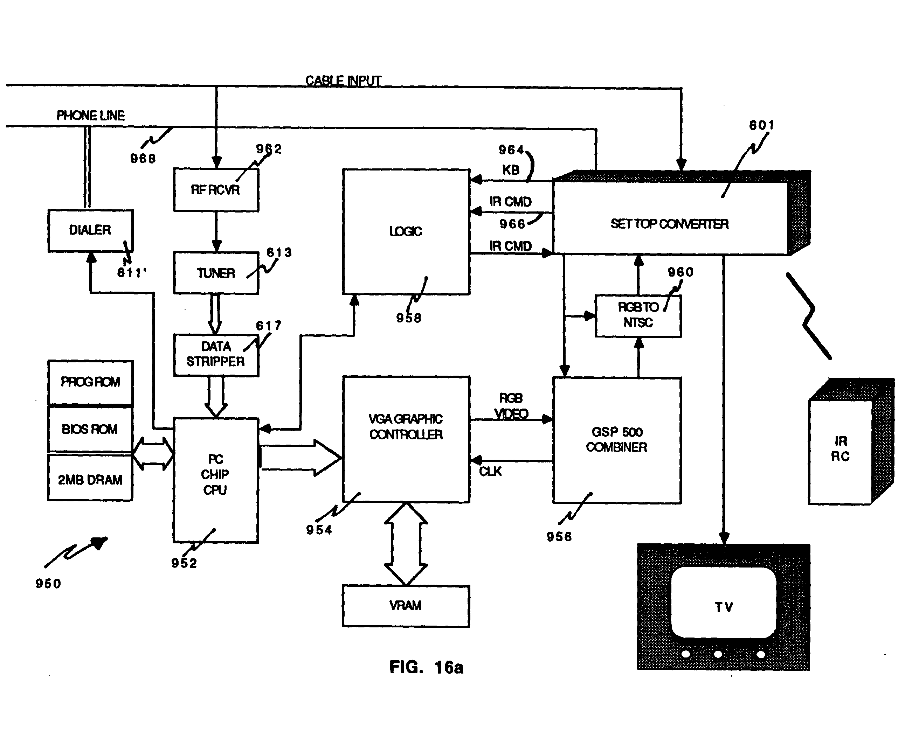

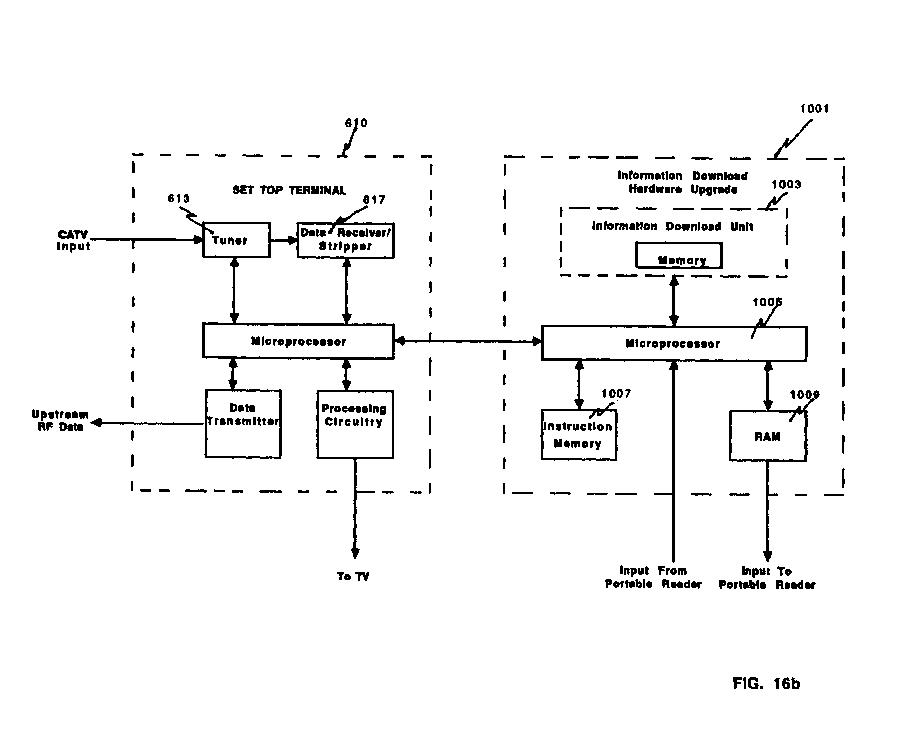

Figures 16a and 16b are examples of hardware modifications or upgrades. A port is used to attach hardware upgrades described below to a set top terminal. Two upgrades are possible to set top converters 601 to assist in receiving and selecting electronic books. A menu generation card upgrade (Figure 16a) and an information download unit (Figure 16b). Each of these upgrades may be connected to the set top terminal unit through an upgrade port. A four wire a cable, ribbon cable or the like may be used to connect the upgrade to the set top converter 601.

A card addition 950 to a set top converter 601 is depicted in Figure 16a. The card 950 shown provides the additional functionality needed to utilize the book selection system with existing set top converter 601 technology. The card 950 may be configured to slip inside the frame of a set top terminal and become part of the set top terminal, an advanced set top terminal. The primary functions the card 950 adds to the set top converter 601 are the interpreting of data signals, generating of menus, sequencing of menus, and, ultimately, the ability of the subscriber to select a book using either the television or a viewer 266. The card 950 also provides a method for a remote location, such as the cable headend, to receive information on books ordered. The books ordered information and control commands may be passed from the cable headend to the card 950 using telephone lines.

The primary components of the card 950 are a PC chip CPU 952, a VGA graphic controller 954, a video combiner 956, logic circuitry 958, NTSC encoder 960, a receiver 962, demodulator (not shown), and a dialer 611'. The card 950 operates by receiving the data text signal from the cable headend through the coaxial cable. The logic circuitry 958 of the card 950 receives data 964, infrared commands 966, and synchronization signals (not shown) from the set top converter 601. Menu selections made by the viewer 266 on the remote control are received by the set top converter's 601 IR equipment and passed through to the card 950. The card 950 interprets the IR signal and determines the book (or menu) the subscriber has selected. The card 950 modifies the IR command to send the information to the set top converter 601. The modified IR command contains the channel information needed by the set top converter 601. Using the phone line 968 and dialer 611', the card 950 is able to transmit books ordered information to the cable headend. It is also possible to receive the books over the telephone lines and by-pass the video distribution system.

These commands are passed through the interface linking the set top terminal's microprocessor with the microprocessor of the hardware upgrades. In this way, subscriber inputs, entered through the set top terminal keypad or remote control, can be transferred to any of the hardware upgrades for processing and responses generated therein can then be sent back to the set top terminal for display. In the preferred embodiment the IR commands 966 are transferred from set top terminal 601 to hardware upgrade.

Hardware upgrades may include a microprocessor, interactive software, processing circuitry, bubble memory, and a long-term memory device. In addition to these basic components, the hardware upgrade may make use of an additional telephone modem or CD-ROM device.

The information download hardware upgrade 1001 (shown in Figure 16b) allows the subscriber to download large volumes of information from the operations center or cable headend using the set top converter 601 601. The hardware upgrade 1001 will enable subscribers to download data, such as books and magazines, to local storage. Primarily, the hardware upgrade 1001 is an additional local storage unit 1003 (e.g., hard disk, floppy, optical disk or magnetic cartridge and may include a microprocessor 1005, instruction memory 1007, and a random access memory 1009, as shown in Figure 16b). Preferably, a small portable viewer 266 is also provided with the upgrade 1001 to enable downloaded text to be read without the use of a TV.

The downloadable information may be text or graphics supplied by the operations center 250 or cable headend. With this upgrade, books may be downloaded and read anywhere with the portable viewer 266. Using this upgrade, books may be downloaded and stored in compressed form for later decompression. The books would be decompressed only at the time of viewing. Important text that the public desires immediate access may made available through this system. Text such as the President's speech, a new law, or a recent abortion decision rendered by the Supreme Court may be made immediately available.

In the preferred embodiment, book ordering information is stored at each set top terminal until it is polled by the cable headend using a polling request message format. An example of a polling request message format consists of six fields, namely: (1) a leading flag at the beginning of the message, (2) an address field, (3) a subscriber region designation, (4) a set top terminal identifier that includes a polling command/response (or P/F) bit, (5) an information field, and (6) a trailing flag at the end of the message. A similar response frame format for information communicated by the set top terminal to the cable headend in response to the polling request may be used.

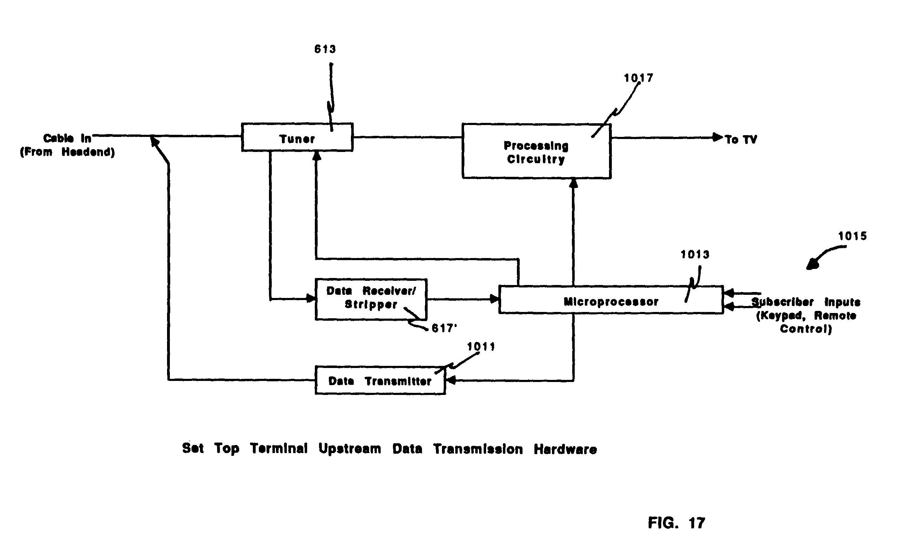

Figure 17 shows a preferred set top terminal that includes a data receiver 617' and a data transmitter 1011. The data transmitter provides upstream data communications capability between the set top terminal 601 and the cable headend. Upstream data transmissions are accomplished using the polling system described and, using a data transmitter 1011. Both receiver 617' and transmitter 1011 may be built into the set top terminal 601 itself or added through an upgrade module. Regardless of the specific hardware configuration, the set top terminal's data transmission capabilities may be accomplished using the hardware shown in Figure 17.

Figure 17 shows RF signals, depicted as being received by a data receiver 617' and tuner 613 working in unison. Both of these devices are interfaced with the microprocessor 1013, which receives inputs 1015, from the subscriber, either through a set top terminal's keypad, a remote control unit or viewer 266. All cable signals intended for reception on the subscriber's TV are accessed by the tuner 613 and subsequently processed by the processing circuitry 1017. This processing circuitry 1017 typically includes additional components (not shown) for descrambling, demodulation, volume control and remodulation on a Channel 3 or 4 TV carrier.

Data targeted to individual set top terminals is received by the data receiver 617' according to each set top terminal's specific address or ID. In this way, each addressable set top terminal only receives its own data. The data receiver 617' may receive set top terminal 601 specific data in the information field of the signal frame described or on a separate data carrier located at a convenient frequency in the incoming spectrum.

The received data includes information regarding books and menus available for selection. The subscriber may enter a series of commands 1015 using a keypad or remote control in order to choose a book or menu. Upon receipt of such commands, the set top terminal's microprocessor 1013 instructs the tuner to tune to the proper frequency of the channel carrying data and subsequently instructs the processing circuitry 1017 to begin descrambling of this data.

Upon selection of a book, the microprocessor 1013 stores any selection information in local memory (not shown) for later data transmission back to the cable headend. The set top terminal's microprocessor 1013 coordinates all CATV signal reception and also interacts with various upstream data transmission components. Typically, the data transmitter 1011 operates in the return frequency band between 5 and 30 MHz. In an alternative embodiment, the frequency band of 10 to 15 MHz may be used. Regardless, however, of the frequency band used, the data transmitter 1011 sends information to the cable headend in the information field of the response frame described. Those skilled in the art will recognize that a number of variations and combinations of the above-described set top terminal hardware components may be used to accomplish upstream data transmissions.

### VI. Booko-On-Demand System

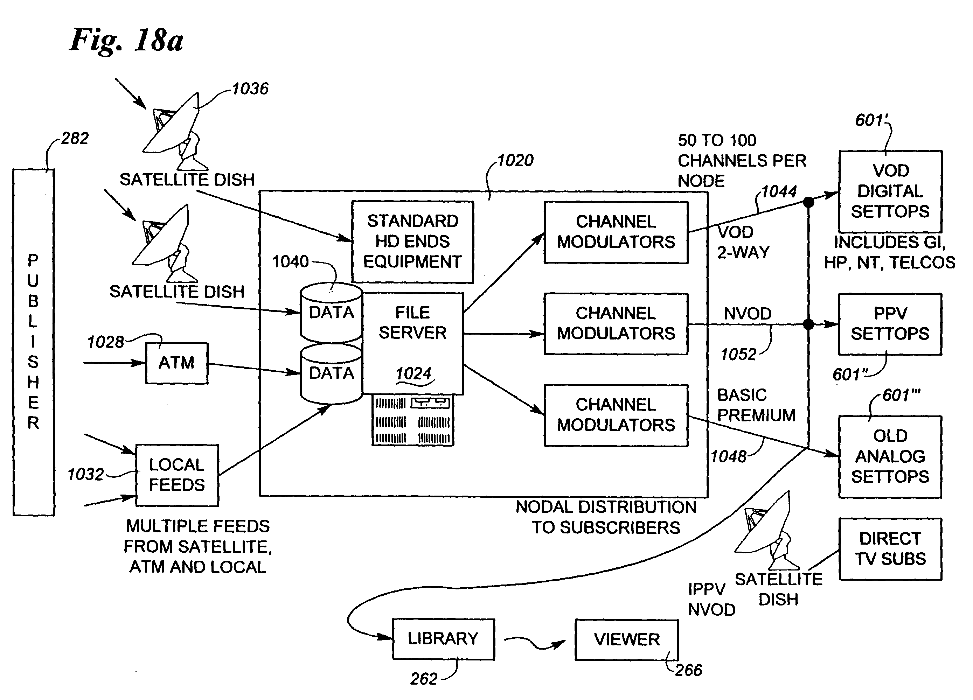

The electronic book system 200 described may also be configured in a book-on-demand style. Figure 18a shows one example of a configuration for a book-on-demand system. A book on demand system requires more powerful two-way communications between the consumer's home, bookstore, school or public library and either the operations center 250 or a distribution site 1020 such as the cable headend. This type of two-way communication can be provided by the hardware shown in Figure 17 and described above.

Referring to Figure 18a, in a book-on-demand system, the subscriber selects the book to be download from an available menu of books (see for example Figures 14d and 14e). The data for menus of available books is usually sent to the subscriber location by the distribution site 1020. After the subscriber's menu selection, information about the subscriber selection (or request) is then communicated to either a distribution point 1020 (such as a cable headend) or the operations center 250. Upon receipt of this request, the needed textual and graphical information for the book is spooled and sent to the subscriber. In this manner, books are only sent when requested by the subscriber and are sent immediately upon demand for the book (or text).

In order to support such a demand system, the text delivery and distribution must be conducted on a strong nodal architectured distribution system, such as, a video-on-demand cable or telephone television system, or through use of individual telephone calls on the public telephone system.

The book-on-demand system allows for a greater selection of books to the subscriber and limits the amount of communicated book data that is unnecessary or unneeded. It also provides the book to the subscriber in a much timelier fashion.

In addition to a stronger distribution system, a book-on-demand system requires a distribution point 1020 to have more sophisticated equipment to access and "spool out" the textual information. This can be accomplished using file server technology 1024 for storing the books and ATM 1028 or telephone-type switching (not shown) to distribute the textual information. The file server 1024 and distribution technology that can be used in configuring such a book-on-demand system is described in U.S. Patent No. 5,262,875 and U.S. Patent 5,218,695, cited above.

Figure 18a shows an embodiment for a book-on-demand system that utilizes file server technology. In addition to books, the embodiment of Figure 18a will support distribution of nearly any digital data. Books or textual files are received from publishers 282 and other sources through local feeds 1032, ATM 1028, or by satellite dish 1036. The data is then stored in memory 1040 at the file server 1024. Preferably, the distribution point 1020 is a cable headend that receives requests from subscribers and delivers text to subscribers over a two-way communication system (such as a video-on-demand system (VOD) 1044).

The library unit 262 can be connected to either a basic premium-type service cable system 1048, a near video-on-demand type cable system (or pay-per-view (PPV) 1052) or a video-on-demand cable system 1044. In connecting with either of these three systems the library 262 may access the cable directly or may access the system through a set top terminal 601', 601", or 601'''.

Using the two-way video-on-demand system 1044, a subscriber is able to request a specific book title and receive that text immediately following its request. To accomplish this, the distribution point 1020 transmits a list of available books through the cable delivery system to the library 262. The library 262 displays the list of available books on a menu or similar format. As described earlier, it is preferred that the library 262 use menus which list categories of available books to form its request from the distribution point 1020. After selecting a book the library 262 then sends a request signal on the two-way communication system 1044 back to the distribution point 1020. This request signal can be handled in two ways. The library 262 either initiates the request or the distribution point 1020 polls the various libraries on to the two-way system 1044. Upon receiving the request for the book title, the text associated with that book title is transmitted to the library 262 using the two-way cable system 1044.

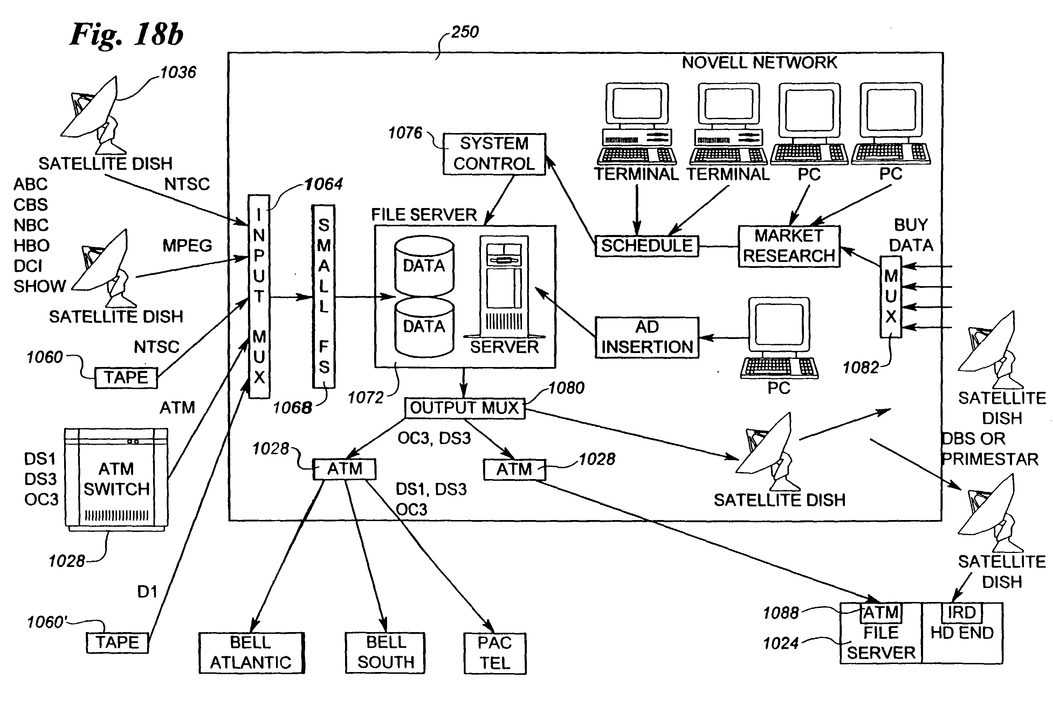

Figure 18b is an expanded view of a preferred operations center 250 that supports a regional or national book-on-demand system. In fact, the operations center 250 shown supports distribution of nearly any digital data. The operations center 250 supports multiple feeds to receive digital information by tape 1060, 1060', ATM 1028, or satellite 1036. The information is processed through an input MUX 1064 and a small file server 1068 before reaching the master file server 1072. Digital data such as books received from publishers 282 is then stored on the master file server 1072. It is preferred that the digital data is stored compressed in a standard format such as MPEG2.

A system controller 1076 provides control over the regional or national book-on-demand system. Books may be packaged into groups to provide feeds to various cable headends. In addition, scheduling and marketing research are conducted at the operations center 250. In order to handle the scheduling and market research, book buy data is received at the operations center 250 through a multiplexer 1082. Book buy information can be provided by the operation center 250 to the billing and collection subsystem 278.

The operations center 250 is also equipped to insert messages or advertisements into the file server. These messages or advertisements will eventually be received by the subscribers.

The master file server 1072 uses an output multiplexer 1080 and ATM 1028 as well as satellite connections to distribute digital data. In the preferred embodiment, cable headends receive text data on books from the master file server 1080 through the output multiplexer 1028 and an ATM system 1028. After receiving the digital book data, the cable headends store the books in a local file server 1024. Figure 18a's distribution point 1020 is an example of a cable headend which may receive data from the operations center 250 of Figure 18b through an ATM hookup 1088 or satellite hookup.

## Claims

1. An apparatus (258) that receives and displays electronic books distributed as text data using a telecommunications system, the apparatus including a connector (212) that connects to the telecommunications system, the connector receiving the text data; **characterised in that** the apparatus (258) comprises:
a library unit (262) connected to the connector (212), comprising:
a digital logic (609) that screens the text data (612) to perform error correction, wherein the text data includes a viewer ID, and
a first memory (600) that stores the screened text data; and
a viewer (266), electronically communicating with the library unit, comprising:
a unique viewer key (605), and
a microprocessor (621) that compares the viewer ID included in the stored text data (612) and the viewer key, wherein the text data is encrypted, and wherein when the viewer ID and the viewer key (605) match, the text data is decompressed and decrypted.

2. The apparatus (258) of claim 1, wherein the library unit (262) further comprises:
means for selecting a portion of the text data that is received by the connector.

3. The apparatus (258) of claim 2, wherein portions of text data are selected by title, and wherein the means for selecting comprises:
means (851) for generating menus displaying titles of portions of text data.

4. The apparatus (258) of claim 1, wherein the first memory (600) comprises:
a memory port; and
a removable and portable memory unit (600) connected to the memory port that stores the text data.

5. The apparatus (258) of claim 1, wherein the viewer (266) comprises:
a second memory (728) that stores text data received from the library unit;
the microprocessor (621), connected to the second memory (728), that controls the functions of the viewer;
a digital display circuitry, connected to the microprocessor (621) that creates displays; and
a liquid crystal display (602), connected to the digital display circuitry, that displays text.

6. The apparatus (258) of claim 5, wherein the digital display circuitry comprises:
a graphics controller (607) that generates graphics to display on the liquid crystal display (602), wherein the electronic books include graphics data with the text data.

7. The apparatus (258) of claim 5, wherein the viewer further comprises a security module (606), connected to the microprocessor that decrypts text data.

8. The apparatus (258) of claim 5, wherein the second memory (607) that stores text data comprises a removable electronic card memory.

9. The apparatus of claim 5, wherein the viewer (266) receives pages of text from an external source, the viewer (266) comprising:
means (740) for receiving subscriber entries comprising:
means (740) for a subscriber to prompt a selection of a portion of text,
a bookmark button (749) for marking a page in a portion of text, and
a next page button (741, 742) for turning a page of text;
means (604) for receiving text from an external source through electronic signals;
means (728), connected to the receiving means, for storing text organized by title, wherein the text may be retrieved by title;
means, connected to the text storing means (728) and means (740) for receiving subscriber entries, for retrieving one page of stored text by title from the storing means, wherein the page of text is retrieved based upon a subscriber entry; and
means (606) for decrypting the retrieved page of text.

10. The apparatus of claim 9, wherein titles representing portions of text are received by the viewer (266) from the external source and selected by a subscriber using the means for receiving subscriber entries, the apparatus further comprising:
means (851), connected to the means for receiving subscriber entries, for generating menus which include titles representing portions of text; and
means (855), connected to the menu generating means, for determining titles to suggest to a subscriber wherein the generated menus suggest titles to a subscriber for selection.

11. The apparatus of claim 2, wherein the text data comprises titles with associated mood indicator data and preview data, wherein the first memory (600) stores the titles, mood indicator data and preview data, wherein the selecting means indicates mood indicators or preview data, and wherein the library unit (262) further comprises:
means (628, 600) for searching the stored portion of text data for matches between the selected mood indicator or selected preview data and the stored mood indicator or stored preview data; and
means for suggesting titles corresponding with the matches.

12. The apparatus (258) of claim 2, wherein the text data (621) comprises titles and personal data, wherein the first memory (600) stores the titles and personal data, and wherein the library unit (262) further comprises:
means for processing the stored personal data and generating a list of stored titles for suggestion; and
means for providing the list to the selecting means so that the selecting means selects a portion of text data using titles from the list of suggested titles.

13. The apparatus (258) of claim 1, wherein the text data (621) is distributed as a composite video signal using a video transmission medium.

14. The apparatus (258) of claim 1, wherein the library unit (262) and the viewer (266) are coupled by radio frequency signals.

15. The apparatus (258) of claim 1, wherein the library unit (262) and the viewer (266) are coupled by a wired connection.

16. The apparatus (258) of claim 1, wherein the library unit (262) and the viewer (266) are contained in a single unit.

17. The apparatus (258) of claim 1, further comprising a telephone connection (270), wherein the text data (621) is provided as telephony signals using a telephone system.

18. The apparatus (258) of claim 17, wherein the telephone connection (270) comprises a wireless modem.

19. The apparatus (258) of claim 1, wherein the display (602) comprises a first LCD screen and a second LCD screen.

## Patentansprüche

1. Gerät (258), das unter Verwendung eines Nachrichtensystems als Textdaten verteilte elektronische Bücher empfängt und darstellt, mit einer die Textdaten empfangenden Anschlußeinrichtung (212) zum Anschluß an das Nachrichtensystem, **dadurch gekennzeichnet, daß** das Gerät (258) aufweist:
eine mit der Anschlußeinrichtung (212) verbundene Bibliothekseinheit (262) mit
einer digitale Logik (609), die die Textdaten (612) zur Fehlerkorrektur durchsucht, wobei die Textdaten eine Betrachter-Identifikation enthalten, und
einen ersten Speicher (600), der die durchsuchten Textdaten speichert; sowie
eine mit der Bibliothekseinheit in elektronischer Verbindung stehende Betrachtungseinrichtung (266) mit
einem eindeutigen Betrachterschlüssel (605) und
einem Mikroprozessor (621), der die in den gespeicherten Textdaten (612) enthaltende Betrachteridentifikation mit dem Betrachterschlüssel vergleicht, wobei die Textdaten verschlüsselt sind, und wobei bei Übereinstimmung zwischen der Betrachteridentifikation und dem Betrachterschlüssel (605) die Textdaten dekomprimiert und entschlüsselt werden.

2. Gerät (258) nach Anspruch 1, wobei die Bibliothekseinheit (262) ferner eine Einrichtung zum Auswählen eines Teils der von der Verbindungseinrichtung empfangenen Textdaten aufweist.

3. Gerät (258) nach Anspruch 2, wobei Textdatenteile nach Titeln ausgewählt werden, und wobei die Auswähleinrichtung eine Einrichtung (851) zur Erzeugung von Menüs aufweist, die Titel von Textdatenteilen anzeigen.

4. Gerät (258) nach Anspruch 1, wobei der erste Speicher (600) aufweist:
einen Speicherport und
eine daran angeschlossene, die Textdaten speichernde abnehmbare und tragbare Speichereinheit (600').

5. Gerät (258) nach Anspruch 1, wobei die Betrachtungseinrichtung (266) aufweist:
einen zweiten Speicher (728), der von der Bibliothekseinheit empfangene Textdaten speichert,
den an den zweiten Speicher (728) angeschlossenen Mikroprozessor (621), der die Funktionen der Betrachtungseinrichtung steuert,
eine an den Mikroprozessor (621) angeschlossene digitale Anzeigeschaltung, die Anzeigen erzeugt, und
eine an die digitale Anzeigeschaltung angeschlossene Flüssigkristallanzeige (602), die Text darstellt.

6. Gerät (258) nach Anspruch 5, wobei die digitale Anzeigeschaltung eine Grafiksteuerung (607') aufweist, die Grafiken zur Darstellung an der Flüssigkristallanzeige (602) erzeugt, wobei die elektronischen Bücher mit den Textdaten Grafikdaten enthalten.

7. Gerät (258) nach Anspruch 5, wobei die Betrachtungseinrichtung ferner einen an den Mikroprozessor angeschlossenen Sicherheitsmodul (606) aufweist, der Textdaten entschlüsselt.

8. Gerät (258) nach Anspruch 5, wobei der Textdaten speichernde zweite Speicher (607) einen abnehmbaren elektronischen Kartenspeicher aufweist.

9. Gerät nach Anspruch 5, wobei die Betrachtungseinrichtung (266) Textseiten von einer externen Quelle empfängt und folgende Elemente aufweist:
eine Einrichtung (740) zum Empfang von Teilnehmereingaben mit
einer Einrichtung (740), mit der ein Teilnehmer die Auswahl eines Textteils einleiten kann,
einem Lesezeichenknopf (749) zum Markieren einer Seite in einem Textteil, und
einem Umblätterknopf (741, 742) zum Umblättern einer Textseite,
eine Einrichtung (604) zum Empfang von Text mittels elektronischer Signale von einer externen Quelle,
eine an die Empfangseinrichtung (728) angeschlossene Einrichtung zum Speichern von nach Titeln organisiertem Text, wobei der Text anhand von Titeln wiederaufgefunden werden kann,
eine an die Textspeichereinrichtung (728) und die Einrichtung (740) zum Empfang von Teilnehmereingaben angeschlossene Einrichtung zum Wiederauffinden einer Seite von gespeichertem Text anhand des Titels aus der Speichereinrichtung, wobei die Textseite aufgrund einer Teilnehmereingabe wiederaufgefunden wird, und
eine Einrichtung (606) zum Entschlüsseln der wiederaufgefundenen Textseite.

10. Gerät nach Anspruch 9, wobei die Textteile angebenden Titel durch die Betrachtungseinrichtung (266) von der externen Quelle empfangen und unter Verwendung der Einrichtung zum Empfang von Teilnehmereingaben durch einen Teilnehmer ausgewählt wird, und wobei das Gerät ferner aufweist:
eine an die Einrichtung zum Empfang von Teilnehmereingaben angeschlossene Einrichtung (851) zur Erzeugung von Menüs, die Textteile angebende Titel enthalten, und
eine an die Menü-Erzeugungseinrichtung angeschlossene Einrichtung (855) zum Bestimmen von einem Teilnehmer vorzuschlagenden Titel, wobei die erzeugten Menüs einem Teilnehmer Titel zur Auswahl vorschlagen.

11. Gerät nach Anspruch 2, wobei die Textdaten Titel mit zugehörigen Stimmungsanzeigedaten und Vorschaudaten enthalten, wobei der erste Speicher (600) die Titel, die Stimmungsanzeigedaten und die Vorschaudaten speichert, wobei die Auswahleinrichtung Stimmungsanzeiger oder Vorschaudaten anzeigt, und wobei die Bibliothekseinheit (262) ferner aufweist:
eine Einrichtung (628, 600) zum Durchsuchen des gespeicherten Textdatenteils auf Übereinstimmungen zwischen den ausgewählten Stimmungsanzeigern oder den ausgewählten Vorschaudaten und dem gespeicherten Stimmungsanzeiger bzw. den gespeicherten Vorschaudaten, und
eine Einrichtung zum Vorschlagen von Titeln entsprechend den Übereinstimmungen.

12. Gerät (258) nach Anspruch 2, wobei die Textdaten (621) Titel und persönliche Daten enthalten, wobei der erste Speicher (600) die Titel und persönlichen Daten speichert, und wobei die Bibliothekseinheit (262) ferner aufweist:
eine Einrichtung zum Verarbeiten der gespeicherten persönlichen Daten und zum Erzeugen einer Liste von gespeicherten Titeln zum Vorschlagen, und
eine Einrichtung, die die Liste der Auswahleinrichtung zur Verfügung stellt, so daß diese einen Textdatenteil unter Verwendung von Titeln aus der Liste vorgeschlagener Titel auswählt.

13. Gerät (258) nach Anspruch 1, wobei die Textdaten (621) als Videosignalgemisch unter Verwendung eines Video-Übertragungsmediums verteilt werden.

14. Gerät (258) nach Anspruch 1, wobei die Bibliothekseinheit (262) und die Betrachtungseinrichtung (266) über Hochfrequenzsignale gekoppelt sind.

15. Gerät (258) nach Anspruch 1, wobei die Bibliothekseinheit (262) und die Betrachtungseinrichtung (266) über eine Drahtverbindung gekoppelt sind.

16. Gerät (258) nach Anspruch 1, wobei die Bibliothekseinheit (262) und die Betrachtungseinrichtung (266) in einer einzigen Einheit enthalten sind.

17. Gerät (258) nach Anspruch 1 mit ferner einem Telefonanschluß (270), wobei die Textdaten (221) als Telefonsignale unter Verwendung eines Telefonsystems vorgesehen sind.

18. Gerät (258) nach Anspruch 17, wobei der Telefonanschluß (270) ein drahtloses Modem enthält.

19. Gerät (258) nach Anspruch 1, wobei die Anzeigeeinrichtung (602) einen ersten und einen zweiten LCD-Schirm aufweist.

## Revendications

1. Dispositif (258) qui reçoit et affiche des livres électroniques répartis sous forme de données textuelles en utilisant un système de télécommunications, le dispositif incluant un connecteur (212) qui se connecte au système de télécommunications, le connecteur recevant les données textuelles, **caractérisé en ce que** le dispositif (258) comporte :
une unité de bibliothèque (262) connectée au connecteur (212), comportant :
une logique numérique (609) qui filtre les données textuelles (612) pour effectuer une correction d'erreurs, les données textuelles incluant un identificateur (ID) de visionneur, et
une première mémoire (600) qui mémorise les données textuelles filtrées, et
un visionneur (266), communiquant électroniquement avec l'unité de bibliothèque, comportant :
une clé de visionneur unique (605), et
un microprocesseur (621) qui compare l'identificateur de visionneur inclus dans les données textuelles mémorisées (612) et la clé de visionneur, dans lequel les données textuelles sont cryptées, et dans lequel, lorsque l'identificateur de visionneur et la clé de visionneur (605) coïncident, les données textuelles sont décompressées et décryptées.

2. Dispositif (258) selon la revendication 1, dans lequel l'unité de bibliothèque (262) comporte en outre :
des moyens de sélection d'une partie des données textuelles qui sont reçues par le connecteur.

3. Dispositif (258) selon la revendication 2, dans lequel des parties de données textuelles sont sélectionnées à l'aide d'un titre, et dans lequel les moyens de sélection comportent :
des moyens (851) pour générer des menus affichant des titres relatifs à des parties de données textuelles.

4. Dispositif (258) selon la revendication 1, dans lequel la première mémoire (600) comporte :
un port de mémoire, et
une unité de mémoire amovible et portable (600') connectée au port de mémoire qui mémorise les données textuelles.

5. Dispositif (258) selon la revendication 1, dans lequel le visionneur (266) comporte :
une seconde mémoire (728) qui mémorise des données textuelles reçues en provenance de l'unité de bibliothèque,
le microprocesseur (621), connecté à la seconde mémoire (728), qui commande les fonctions du visionneur,
un circuit d'affichage numérique, connecté au microprocesseur (621) qui crée des affichages, et
un écran à cristaux liquides (602), connecté au circuit d'affichage numérique, qui affiche du texte.

6. Dispositif (258) selon la revendication 5, dans lequel le circuit d'affichage numérique comporte :
un contrôleur graphique (607') qui génère des graphiques à afficher sur l'affichage à cristaux liquides (602), dans lequel les livres électroniques incluent des données graphiques avec les données textuelles.

7. Dispositif (258) selon la revendication 5, dans lequel le visionneur comporte en outre un module de sécurité (606), connecté au microprocesseur qui décrypte les données textuelles.

8. Dispositif (258) selon la revendication 5, dans lequel la seconde mémoire (607) qui mémorise des données textuelles comporte une carte mémoire électronique amovible.

9. Dispositif selon la revendication 5, dans lequel le visionneur (266) reçoit des pages de texte en provenance d'une source externe, le visionneur (266) comportant :
des moyens (740) pour recevoir des entrées d'abonné comportant :
des moyens (740) permettant à un abonné de demander une sélection d'une partie de texte,
un bouton de signet (749) pour marquer une page dans une partie de texte, et
un bouton de page suivante (741, 742) pour tourner une page de texte,
des moyens (604) pour recevoir un texte en provenance d'une source externe par l'intermédiaire de signaux électroniques,
des moyens (728), connectés aux moyens de réception, pour mémoriser un texte organisé par titre, dans lesquels le texte peut être récupéré par titre,
des moyens, connectés aux moyens de mémorisation de texte (728) et aux moyens (740) de réception d'entrées d'abonné, pour récupérer une page de texte mémorisé par titre à partir des moyens de mémorisation, dans lesquels la page de texte est récupérée sur la base d'une entrée d'abonné, et
des moyens (606) pour décrypter la page de texte récupérée.

10. Dispositif selon la revendication 9, dans lequel des titres représentant des parties de texte sont reçus par le visionneur (266) en provenance de la source externe et sélectionnés par un abonné en utilisant les moyens de réception d'entrées d'abonné, le dispositif comportant en outre :
des moyens (851), connectés aux moyens de réception d'entrées d'abonné, pour générer des menus qui incluent des titres représentant des parties de texte, et
des moyens (855), connectés aux moyens de génération de menus, pour déterminer des titres à suggérer à un abonné, dans lesquels les menus générés suggèrent des titres à un abonné pour qu'ils soient sélectionnés.

11. Dispositif selon la revendication 2, dans lequel les données textuelles comportent des titres ayant des données d'indicateur de mode et des données de prévisualisation associées, dans lequel la première mémoire (600) mémorise les titres, les données d'indicateur de mode et les données de prévisualisation, dans lequel les moyens de sélection indiquent des indicateurs de mode ou des données de prévisualisation, et dans lequel l'unité de bibliothèque (262) comporte en outre :
des moyens (628, 600) pour rechercher la partie mémorisée de données textuelles pour faire coïncider l'indicateur de mode sélectionné ou les données de prévisualisation sélectionnées avec l'indicateur de mode mémorisé ou les données de prévisualisation mémorisées, et
des moyens pour suggérer des titres correspondant aux coïncidences.

12. Dispositif (258) selon la revendication 2, dans lequel les données textuelles (621) comportent des titres et des données personnelles, dans lequel la première mémoire (600) mémorise les titres et les données personnelles, et dans lequel l'unité de bibliothèque (262) comporte en outre :
des moyens pour traiter les données personnelles mémorisées et générer une liste de titres mémorisés pour qu'ils soient suggérés, et
des moyens pour fournir la liste aux moyens de sélection de sorte que les moyens de sélection sélectionnent une partie de données textuelles en utilisant des titres provenant de la liste de titres suggérés.

13. Dispositif (258) selon la revendication 1, dans lequel les données textuelles (621) sont réparties sous la forme d'un signal vidéo composite en utilisant un support de transmission vidéo.

14. Dispositif (258) selon la revendication 1, dans lequel l'unité de bibliothèque (262) et le visionneur (266) sont reliés par des signaux de fréquence radio.

15. Dispositif (258) selon la revendication 1, dans lequel l'unité de bibliothèque (262) et le visionneur (266) sont reliés par une connexion câblée.

16. Dispositif (258) selon la revendication 1, dans lequel l'unité de bibliothèque (262) et le visionneur (266) sont contenus dans une seule unité.

17. Dispositif (258) selon la revendication 1, comportant en outre une connexion téléphonique (270), dans lequel les données textuelles (621) sont fournies sous la forme de signaux téléphoniques en utilisant un système téléphonique.

18. Dispositif (258) selon la revendication 17, dans lequel la connexion téléphonique (270) comporte un modem sans fil.

19. Dispositif (258) selon la revendication 1, dans lequel l'affichage (602) comporte un premier écran à cristaux liquides (LCD) et un second écran LCD.
